# FASCICULE DE BREVET EUROPEEN

(11) **EP 0 459 065 B1**
(45) Date de publication et mention de la délivrance du brevet: **05.04.1995**
(21) Numéro de dépôt: 90401664.9
(22) Date de dépôt: 14.06.1990
(51) Int. Cl.: H04Q 7/20

(54) **Installation téléphonique pour le chargement à distance de données d'abonnement téléphonique d'une station autonome**
Telefonanlage für das Fernladen von Fernsprechabonnement-Daten einer autonomen Station
Telephone arrangement for remote loading of telephonic subscription data from an autonomous station

(30) Priorité: 29.05.1990 FR 9006662
(43) Date de publication de la demande: 04.12.1991
(73) Titulaire: FRANCE TELECOM, 75015 Paris (FR)
(72) Inventeur: Langrand, Franck, F-75013 Paris (FR); Mazziotto, Gérald, F-75014 Paris (FR); Baudoux, Sophie, F-75013 Paris (FR)
(74) Mandataire: Plaçais, Jean-Yves

(56) Documents cités:
- ELECTRICAL COMMUNICATION vol. 63, no. 4, 1989, BRUSSELS (BE) pages 389 - 399; M.BALLARD ET AL: 'Cellular Mobile Radio as an Intelligent Network Application '
- PREMIER COLLOQUE INTERNATIONAL SUR L'INTELLIGENCE DANS LES RESEAUX Mars 1989, BORDEAUX (FR) pages 57 - 61; J.A. AUDESTAND: 'Intelligence in public land mobile networks: use of the mobile application part '
- PROCEEDINGS OF THE NATIONAL COMMUNICATIONS FORUM vol. 42, no. 2, 30 Septembre 1988, OAK BROOK (US) pages 1706 - 1713; P E. JACKSON ET AL: 'portable communication '
- TELCOM REPORT vol. 12, no. 5, 1989, München (DE) pages 142 - 145; H. AUSPURG: 'Intelligente Netze beschleunigen Einführung neuer Dienste '

## Description

L'invention concerne le chargement à distance des données d'abonnement téléphonique d'une station autonome.

Elle trouve une application dans les systèmes de télécommunication avec des stations autonomes mobiles ou fixes telles que les systèmes dits GSM pour "Groupe Spécial Mobile", DCT pour "Digital Cordless Telephone" et les systèmes basés sur l'interface radioélectrique CAI pour "Common Air Interface" notamment le système français POINTEL (Marque déposée).

D'une façon générale, de tels systèmes de communication comprennent au moins une borne fixe raccordée à un réseau téléphonique commuté et au moins une station autonome capables d'une intercommunication à distance avec la borne fixe, consécutivement à une demande d'appel de ladite station autonome.

Le plus souvent, la personnalisation d'une station autonome est déterminée par les données d'abonnement téléphonique de ladite station autonome.

Lors d'une demande de liaison téléphonique émanant de la station autonome, les données d'abonnement téléphonique de la station autonome sont contrôlées par un centre d'autorisation relié au réseau téléphonique commuté et propre à interdire l'établissement de la liaison téléphonique en fonction desdites données d'abonnement téléphonique.

En pratique, au moins une partie des données d'abonnement téléphonique a un caractère secret ou confidentiel en vue d'éviter l'établissement de liaisons téléphoniques frauduleuses.

Dans les systèmes de télécommunication avec les stations autonomes mobiles de la première génération tels que les systèmes dits NMT pour "Nordic Mobile Telephone", et RADIOCOM 2000, les données d'abonnement téléphonique sont chargées dans la station autonome mobile par un installateur ou un vendeur d'équipement téléphonique.

Ce procédé de chargement présente les inconvénients suivants : souplesse et flexibilité de l'offre commerciale insatisfaisantes, confusion des rôles entre le vendeur d'équipement téléphonique et le prestataire de services, et faible degré de sécurité contre les liaisons frauduleuses.

Dans le système de télécommunication avec les stations autonomes mobiles de la deuxième génération tel que le système GSM (ELECTRICAL COMMUNICATION vol.63, No. 4, 1989, BRUSSELS (BE), pages 389-399 ; M. BALLARD ET AL : "Cellular Mobile Radio as an Intelligent Network Application"), il est prévu de programmer les données d'abonnement téléphonique dans un module d'abonné amovible. Cette solution a l'avantage de conférer un degré de sécurité supérieur au procédé de chargement mentionné ci-avant et une meilleure souplesse dans la gestion des abonnements téléphoniques. Néanmoins, la programmation des données d'abonnement dans le module d'abonné amovible, qui se fait par l'intermédiaire d'un appareillage spécialisé, nécessite une infrastructure lourde pour la distribution des abonnements téléphoniques.

La présente invention vise essentiellement à apporter une solution à ce problème.

Ainsi, un but de l'invention est de fournir un procédé de chargement à distance des données d'abonnement téléphonique d'une station autonome.

La présente invention porte sur une installation téléphonique comprenant :
- au moins une borne fixe reliée à un réseau téléphonique commuté ;
- au moins une station autonome capable d'une intercommunication à distance avec la borne fixe, consécutivement à une demande d'appel de ladite station autonome, la station autonome comportant des moyens de traitement comprenant :
   . une mémoire destinée à stocker des données d'abonnement téléphonique relatives à la station autonome, et
   . des moyens de chiffrement/déchiffrement de données ;
- des moyens d'autorisation reliés à la borne fixe et munis de moyens de traitement propres à contrôler lesdites données d'abonnement téléphonique, en vue d'interdire l'établissement d'une liaison téléphonique.

Selon une définition générale de l'invention, les moyens de traitement des moyens d'autorisation comprennent :
- une mémoire propre à contenir, en correspondance, des données d'abonnement téléphonique relatives à la station autonome et une donnée propre à indiquer que lesdites données d'abonnement téléphonique doivent être chargées à distance dans ladite station autonome ;
- des moyens de chiffrement/déchiffrement des données à clés variables avec des moyens permettant la sélection d'au moins une clé particulière pour la station autonome ;
- des moyens de commande propres à rechercher, sur commande, des données d'abonnement téléphonique par l'identification de la station autonome ; et

au niveau des moyens d'autorisation,
. en réponse à un mot numérique public de demande d'appel émanant de la station autonome accompagné d'un mot numérique public d'identification de la station autonome et en présence d'un signal de demande de chargement vérifiant une condition prédéterminée relative au chargement à distance des données d'abonnement téléphonique, les moyens de commande recherchent toutes les données d'abonnement téléphonique relatives à la station autonome ainsi que celle indiquant l'ordre de chargement à distance,
. les moyens de chiffrement/déchiffrement chiffrent à l'aide de la clé particulière celles qui sont secrètes,
. les moyens de traitement autorisent la transmission des données d'abonnement téléphonique publiques en clair ainsi que celles secrètes ainsi chiffrées vers ladite station autonome en fonction de la valeur de la donnée indiquant l'ordre de chargement à distance,

tandis qu'au niveau de la station autonome,
. les moyens de chiffrement/déchiffrement déchiffrent les données d'abonnement téléphonique secrètes chiffrées ainsi reçues à l'aide de la clé particulière, et
. les moyens de traitement stockent les données d'abonnement téléphonique publiques ainsi transmises en clair et secrètes ainsi déchiffrées dans la mémoire de la station autonome.

Une telle installation a l'avantage de ne pas nécessiter d'appareillage spécifique pour la programmation ou le chargement à distance des données d'abonnement téléphonique et permet d'utiliser l'infrastructure existante du réseau de communication pour la distribution et la gestion des abonnements téléphoniques.

De plus, la transmission chiffrée des données d'abonnement téléphonique secrètes confère un degré de sécurité élevé pour le chargement à distance desdites données d'abonnement téléphonique.

Selon un mode de réalisation préféré de l'invention, le signal de demande de chargement est un signal émanant de la station autonome.

En pratique, le signal de demande émanant de la station autonome consiste à entrer au clavier de la station autonome le mot numérique public de demande d'appel.

Selon un autre mode de réalisation de la présente invention, le signal de demande de chargement est un signal émanant des moyens d'autorisation.

Selon un autre aspect de l'invention, consécutivement à la transmission des données d'abonnement téléphonique publiques en clair et celles secrètes chiffrées, les moyens de traitement des moyens d'autorisation délivrent vers la station autonome un mot numérique public de demande d'authentification accompagné d'un mot-clé aléatoire ;
en réponse au mot numérique de demande d'authentification, les moyens de chiffrement/déchiffrement de la station autonome chiffrent le mot-clé aléatoire ainsi reçu à l'aide de données d'abonnement téléphonique secrètes ainsi chargées à distance et formant une clé supplémentaire particulière pour la station autonome,
la station autonome transmet ledit mot-clé aléatoire chiffré vers les moyens d'autorisation accompagné du mot numérique de réponse d'authentification, et
en réponse au mot numérique de réponse d'authentification, les moyens de chiffrement/déchiffrement des moyens d'autorisation déchiffrent le mot-clé aléatoire chiffré ainsi reçu, comparent le mot-clé aléatoire ainsi déchiffré avec le mot-clé aléatoire généré, et en fonction de la comparaison stockent une donnée indiquant que les données d'abonnement téléphonique sont chargées dans la station autonome ainsi qu'établissent la liaison téléphonique.

En pratique, les données d'abonnement téléphonique secrètes comprennent le nombre d'identification personnel de la station autonome.

En pratique, les données d'abonnement téléphonique publiques comprennent le mot numérique public de demande d'appel, le mot numérique d'identification de l'opérateur, le mot numérique relatif à la classe de service de la station autonome et les données numériques d'abonnement.

Selon un autre aspect de l'invention, les moyens de chiffrement/déchiffrement chiffrent/déchiffrent le nombre d'identification personnel de la station autonome en fonction de données variables et de leur transformé par une fonction cryptographique F à l'aide de la clé particulière et d'une donnée variable supplémentaire.

Selon une variante de l'invention dans laquelle la station autonome est capable d'intercommunication à distance avec un réseau téléphonique commuté auxiliaire dont les moyens d'autorisation auxiliaires, sont reliés aux moyens d'autorisation en vue de permettre l'échange de données avec lesdits moyens d'autorisation, caractérisés en ce que les moyens de traitement des moyens d'autorisation auxiliaires comprennent :
- une mémoire propre à contenir des données d'abonnement téléphonique provisoires relatives à la station autonome ;
- des moyens de commande propres à générer des données d'abonnement téléphonique provisoires pour la station autonome ; et

au niveau des moyens d'autorisation,
. en réponse à un mot numérique public de demande de raccordement avec le réseau téléphonique auxiliaire émanant des moyens d'autorisation auxiliaires, les moyens de traitement génèrent des données variables et calculent leur transformé à l'aide d'une clé particulière formée à partir de données d'abonnement téléphonique secrètes lorsque le mot numérique public de demande de raccordement vérifie une condition prédéterminée relative à l'authentification de la station autonome par les moyens d'autorisation,
. les moyens de traitement transmettent les données variables et leur transformé ainsi calculés vers les moyens d'autorisation auxiliaires ;

au niveau des moyens d'autorisation auxiliaires,
. les moyens de commande génèrent des données d'abonnement téléphonique publiques provisoires,
. les moyens de commande génèrent des données d'abonnement téléphonique secrètes provisoires et les chiffrent à l'aide des variables et leur transformé ainsi reçus,
. les moyens de traitement transmettent les données d'abonnement téléphonique secrètes provisoires ainsi chiffrées vers la station autonome accompagnées desdites données d'abonnement téléphonique provisoires publiques ainsi générées ; et

au niveau de la station autonome,
. les moyens de chiffrement/déchiffrement déchiffrent les données d'abonnement téléphonique secrètes provisoires chiffrées ainsi reçues à l'aide de la clé particulière formée à partir de données d'abonnement téléphonique secrètes, et
. les moyens de traitement stockent les données d'abonnement téléphonique publiques provisoires ainsi reçues en clair et secrètes ainsi déchiffrées dans la mémoire.

Une telle installation a l'avantage de permettre la génération des données d'abonnement téléphonique secrètes au niveau des moyens d'autorisation auxiliaires sans transmission au préalable desdites données d'abonnement téléphonique secrètes entre les moyens d'autorisation et les moyens d'autorisation auxiliaires, ce qui confère un degré de sécurité élevé pour le chargement à distance desdites données d'abonnement téléphonique provisoires.

En pratique, les données d'abonnement téléphonique secrètes provisoires comprennent le nombre d'identification personnel provisoire de la station autonome.

En pratique, les données d'abonnement téléphonique publiques provisoires comprennent le mot numérique public de demande d'appel, le mot numérique d'identification de l'opérateur, le mot numérique relatif à la classe de service de la station autonome et les données numériques d'abonnement.

Selon un autre aspect de l'invention, les moyens de chiffrement/déchiffrement chiffrent/déchiffrent le nombre d'identification personnel provisoire de la station autonome en fonction de données vériables et de leur transformé par une fonction cryptographique F à l'aide de la clé particulière.

Avantageusement, les moyens de chiffrement/déchiffrement chiffrent/déchiffrent le nombre d'identification personnel provisoire de la station autonome en fonction des données variables, de leur transformé par une fonction cryptographique F à l'aide de la clé particulière et d'une donnée variable supplémentaire générée par les moyens de commande des moyens d'autorisation auxiliaires.

Selon une autre caractéristique de l'invention, les moyens d'autorisation ou les moyens d'autorisation auxiliaires correspondent à un centre d'autorisation général pour l'ensemble des stations autonomes et des bornes fixes du réseau commuté ou du réseau commuté auxiliaire.

Selon une autre caractéristique de l'invention, les moyens d'autorisation ou les moyens d'autorisation auxiliaires sont logés dans la borne fixe et sont reliés à un centre d'autorisation général pour l'ensemble des stations autonomes et des bornes fixes du réseau commuté ou du réseau commuté auxiliaire.

L'invention concerne également un procédé pour le chargement à distance de données d'abonnement téléphonique destiné à servir dans une installation téléphonique.

Selon le procédé de l'invention, il est prévu d'équiper les moyens de traitement des moyens d'autorisation :
- d'une mémoire propre à contenir, en correspondance, des données d'abonnement téléphonique relatives à la station autonome et une donnée propre à indiquer que lesdites données d'abonnement téléphonique doivent être chargées à distance dans ladite station autonome ;
- de moyens de chiffrement/déchiffrement des données à clés variables avec des moyens permettant la sélection d'au moins une clé particulière pour la station autonome ;
- de moyens de commande propres à rechercher sur commande des données d'abonnement téléphonique par l'identification de la station autonome

et le procédé comprend les étapes suivantes :
a) au niveau des moyens d'autorisation,
   . a1) en réponse à un mot numérique public de demande d'appel émanant de la station autonome accompagné d'un mot numérique public d'identification de la station autonome et en présence d'un signal de commande vérifiant une condition prédéterminée relative au chargement à distance des données d'abonnement téléphonique, rechercher toutes les données d'abonnement téléphonique relatives à la station autonome ainsi que celle indiquant l'ordre de chargement à distance,
   . a2) chiffrer à l'aide de la clé particulière celles qui sont secrètes,
   . a3) autoriser la transmission des données d'abonnement téléphonique publiques en clair ainsi que celles secrètes ainsi chiffrées vers ladite station autonome en fonction de la valeur de la donnée indiquant l'ordre de chargement à distance,
b) au niveau de la station autonome,
   . b1) déchiffrer les données d'abonnement téléphonique secrètes chiffrées ainsi reçues à l'aide de la clé particulière,
   . b2) stocker les données d'abonnement publiques ainsi transmises en clair et secrètes ainsi déchiffrées dans la mémoire de la station autonome.

Selon une variante particulièrement intéressante de l'invention, le procédé de chargement à distance des données d'abonnement téléphonique conforme à l'invention s'applique aussi à une installation téléphonique dans laquelle la station autonome est capable d'intercommunication à distance avec un réseau téléphonique commuté auxiliaire dont les moyens d'autorisation auxiliaires sont reliés aux moyens d'autorisation en vue de permettre l'échange de données avec lesdits moyens d'autorisation.

Dans cette variante du procédé, il est prévu d'équiper les moyens de traitement des moyens d'autorisation auxiliaires :
- d'une mémoire propre à contenir des données d'abonnement téléphonique provisoires relatives à la station autonome ;
- de moyens de commande propres à générer des données d'abonnement téléphonique provisoires pour la station autonome ; et

le procédé comprend les étapes suivantes :
1) au niveau des moyens d'autorisation,
   . 11) en réponse a un mot numérique public de demande de raccordement avec le réseau téléphonique auxiliaire émanant des moyens d'autorisation auxiliaires, générer des données variables, calculer leur transformé à l'aide d'une clé particulière formée à partir de données d'abonnement téléphonique secrètes lorsque le mot numérique public de demande de raccordement vérifie une condition prédéterminée relative à l'authentification de la station autonome par les moyens d'autorisation,
   . 12) transmettre les données variables et leur transformé ainsi calculés vers les moyens d'autorisation auxiliaires,
2) au niveau des moyens d'autorisation auxiliaires,
   . 21) générer des données d'abonnement téléphonique publiques provisoires,
   . 22) générer des données d'abonnement téléphonique secrètes provisoires et les chiffrer à l'aide des données variables et de leur transformé,
   . 23) transmettre les données d'abonnement téléphonique secrètes provisoires ainsi chiffrées vers la station autonome accompagnées desdites données d'abonnement téléphonique provisoires publiques ainsi générées,
3) au niveau de la station autonome,
   . 31) déchiffrer les données d'abonnement téléphonique secrètes provisoires chiffrées ainsi reçues à l'aide de la clé particulière formée à partir de données d'abonnement téléphonique secrètes, et
   . 32) stocker les données d'abonnement téléphonique publiques provisoires ainsi reçues en clair et secrètes ainsi déchiffrées dans la mémoire.

Avantageusement, l'étape 22) comprend en outre les étapes suivantes :
*221) générer une donnée variable supplémentaire et chiffrer les données d'abonnement téléphonique à l'aide en outre de ladite donnée variable complémentaire.

D'autres caractéristiques et avantages de l'invention apparaîtront à l'examen de la description détaillée ci-après, et des dessins annexés, sur lesquels :
- la figure 1 représente schématiquement une installation téléphonique selon l'invention ;
- la figure 2 est une vue schématique illustrant le protocole relatif au chargement à distance des données d'abonnement téléphonique selon l'invention ;
- la figure 3 illustre de façon schématique les échanges de données entre la station autonome et la borne fixe selon l'invention ;
- la figure 4 illustre schématiquement le chiffrement/déchiffrement des données d'abonnement téléphonique secrètes ;
- la figure 5 est une vue schématique d'une installation téléphonique dans laquelle la station autonome interagit avec un réseau téléphonique commuté auxiliaire selon l'invention ; et
- la figure 6 est une vue schématique illustrant le protocole relatif au chargement à distance des données d'abonnement téléphonique dans une installation conforme à la figure 5.

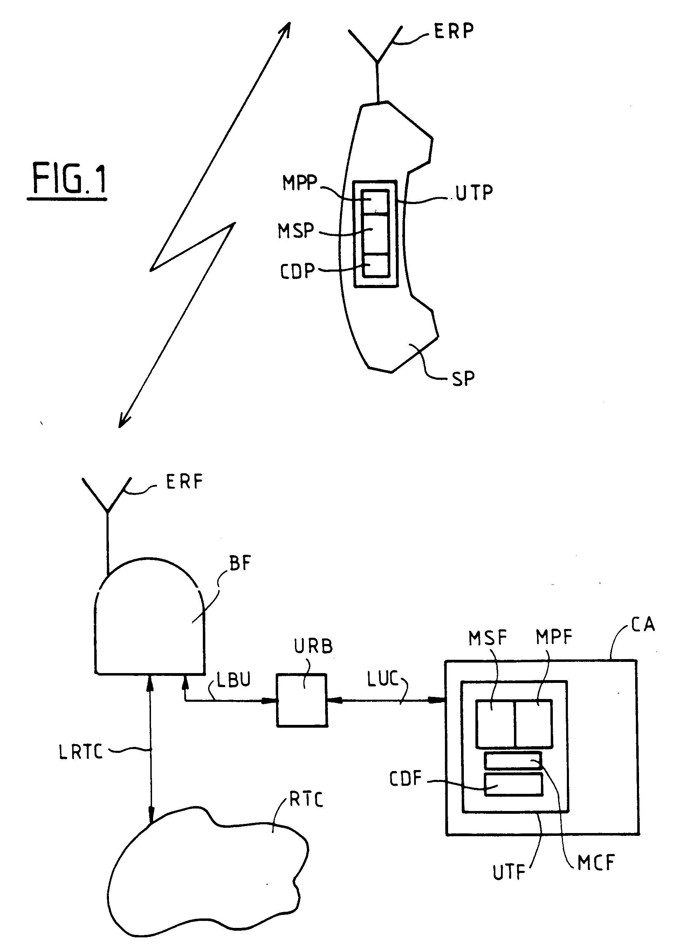

La figure 1 représente schématiquement une installation téléphonique destinée à servir dans un réseau de télécommunication de type POINTEL (Marque déposée) soumis à la norme anglo-saxonne "Common Air Interface" CAI portant la référence MPT1375.

La station autonome SP qui peut être mobile ou fixe, est capable d'intercommunication à distance avec une borne fixe BF, consécutivement à une demande d'appel de la station autonome SP. La station autonome SP est équipée d'un ensemble ERP constitué d'un émetteur/récepteur et d'une antenne.

De son côté, la borne fixe BF est équipée d'un ensemble ERF constitué d'un émetteur/récepteur et d'une antenne pour l'intercommunication à distance entre la borne fixe et la station autonome.

La norme CAI prévoit que le milieu de transmission radioélectrique entre la station autonome et la borne fixe est constitué de canaux téléphoniques B et de canaux de signalisation numérique D.

La borne fixe est raccordée à un réseau téléphonique commuté RTC via une liaison téléphonique LRTC. La norme CAI prévoit également que la station autonome comporte des moyens de traitement UTP comprenant :
- une mémoire subdivisée en une zone mémoire publique MPP destinée à stocker des données d'abonnement téléphonique publiques de la station autonome et en une zone mémoire secrète MSP destinée à stocker des données d'abonnement téléphonique secrètes de ladite station ; et
- des moyens de chiffrement/déchiffrement de données CDP.

Il y a lieu de remarquer ici que la subdivision de la mémoire de la station autonome en une zone protégée et en une zone non protégée est avantageuse pour conférer un degré de sécurité supplémentaire. Toutefois, cette subdivision n'est pas indispensable pour la mise en oeuvre de l'invention.

L'installation est complétée par des moyens d'autorisation CA reliés à la borne fixe via une unité de raccordement de borne URB. Une liaison téléphonique spécialisée LBU permet la connexion de l'unité de raccordement de borne URB à la borne fixe BF tandis qu'une ligne de signalisation numérique LUC permet la connexion des moyens d'autorisation CA à l'unité de raccordement de borne URB.

Les moyens d'autorisation CA comprennent des moyens de traitement UTF équipés d'une mémoire propre à contenir les données d'abonnement téléphonique de la station autonome, et permettant le contrôle des données d'abonnement téléphonique, en vue d'interdire l'établissement d'une liaison téléphonique entre la borne fixe et la station autonome.

La mémoire des moyens d'autorisation est avantageusement subdivisée en une zone mémoire publique MPF propre à contenir les données d'abonnement téléphonique publiques de la station autonome et en une zone mémoire secrète MSF propre à contenir les données d'abonnement téléphonique secrètes de ladite station autonome. Bien entendu, cette subdivision n'est pas indispensable pour la mise en oeuvre de l'invention.

Il est à noter ici que les moyens d'autorisation CA correspondent à un centre d'autorisation général pour l'ensemble des stations autonomes et des bornes fixes du réseau commuté RTC.

Il y a lieu de remarquer également qu'il existe des systèmes de télécommunications à stations autonomes dans lesquels les moyens d'autorisation sont logés dans au moins une borne fixe et sont reliés à un centre d'autorisation général pour l'ensemble des stations autonomes et des bornes fixes du réseau commuté RTC.

Dans la suite de la description, on ne considérera que les systèmes de télécommunications dans lesquels les moyens d'autorisation correspondent au centre d'autorisation général du réseau commuté. Toutefois, les moyens essentiels et constitutifs de l'invention s'appliquent également aux moyens d'autorisation logés dans la borne fixe.

Les données d'abonnement téléphonique de type POINTEL (Marque déposée) sont alloués par un exploitant POINTEL à son client, lors de la prise d'abonnement. Ces données sont nécessaires à la station autonome, pour lui permettre d'accéder aux services POINTEL.

Selon la norme CAI, les données d'abonnement téléphonique sont les suivantes :
- le mot numérique public de demande d'appel LID (pour "Link Identification Data") correspondant au premier paquet de bits à envoyer vers une borne fixe pour établir une liaison radioélectrique, et dont la taille est de 16 bits ;
- le mot numérique relatif au nombre secret d'identification de la station autonome PIN, (pour "Personal Identification Number"), et dont la taille est de 64 bits ;
- le mot numérique d'identification de l'opération OPSIC (pour "Operators Identity Code"), dont la taille est de 9 bits ;
- le mot numérique TCOS (pour "Telecom Class Of Service"), relatif à la classe du service de la station autonome et dont la taille est de 3 bits ; et
- les données numériques TRD (pour "Telepoint Registration Data"), relatives aux données supplémentaires d'abonnement téléphonique destinées à identifier l'abonnement de la station autonome de manière unique, et dont la taille est de 80 bits au maximum.

La norme CAI rend obligatoire les mots numériques LID, PIN, OPSIC et TCOS pour l'établissement d'une liaison radioélectrique téléphonique. La norme CAI définit également la taille de ces mots. Par contre, le mot TRD est laissé à la discrétion de l'opérateur, il est par exemple codé en décimaux.

D'autre part, le mot OPSIC identifie l'exploitant POINTEL auprès duquel un abonnement a été souscrit.

D'une façon générale, les données d'abonnement téléphonique, après l'allocation, sont utilisées lors des appels du POINTEL pour authentifier la station autonome avant de lui fournir le service demandé.

Actuellement, la norme CAI prévoit un chargement manuel des données d'abonnement téléphonique par l'installateur ou le vendeur d'équipements téléphoniques de la station autonome.

Or, un tel procédé de chargement de données d'abonnement téléphonique n'est pas satisfaisant dans la mesure où il exige une intervention manuelle du vendeur d'équipements téléphoniques ou de l'abonné et présente un degré de sécurité faible contre les abonnements frauduleux.

Le Demandeur s'est posé le problème de fournir un procédé de chargement à distance des données d'abonnement téléphonique permettant de remédier aux inconvénients mentionnés ci-avant sans pour cela modifier l'infrastructure d'une installation téléphonique de type POINTEL.

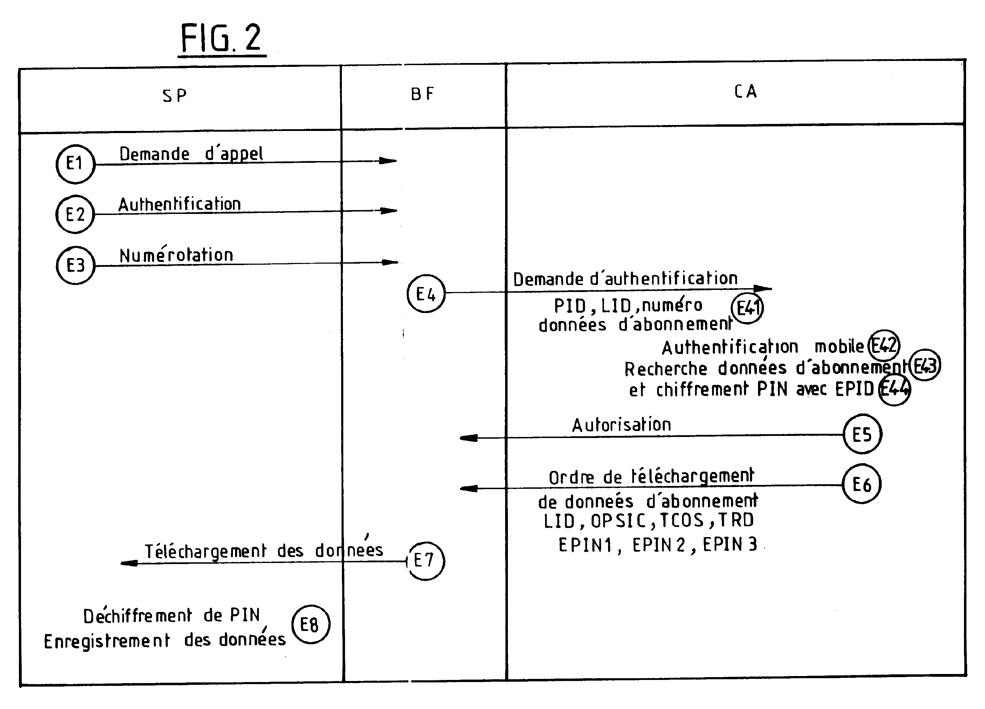

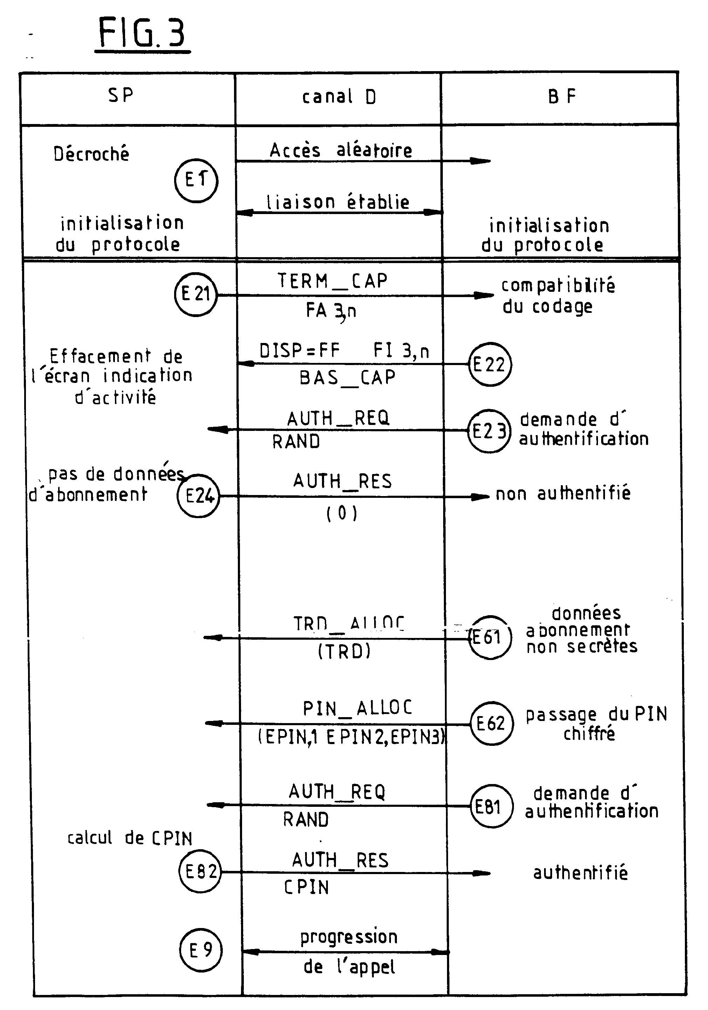

Sur les figures 2 et 3, on a représenté schématiquement les étapes essentielles et constitutives du protocole de chargement à distance des données d'abonnement téléphonique selon l'invention.

Le protocole de chargement à distance est d'abord initialisé par l'étape E1 relative à la demande d'appel émanant de la station autonome.

L'étape E1 débute par le décrochage du combiné de la station autonome en vue d'établir une liaison radioélectrique avec la borne fixe BF. L'accès est aléatoire et s'effectue sur l'un des quarante canaux affectés pour la norme CAI. La liaison radioélectrique est établie avec la borne fixe BF lorsque le mot numérique public de demande d'appel LID est accepté par le réseau téléphonique commuté.

Dans l'étape E2, la station autonome échange des messages d'accord avec la borne fixe, ce qui permet l'authentification de la station autonome.

Plus précisément, la station autonome émet le message relatif aux capacités de la station autonome TERM_CAP pour "Terminal Capabilities Information Element" accompagné du message relatif à l'activité de la station autonome FA3,n pour "Feature Activation Information Element". Les messages TERM_CAP et FA3,n permettent à la station autonome de se présenter devant la borne fixe (étape E21).

En réponse aux messages TERM_CAP et FA3,n, la borne fixe envoie les messages DISP=FF relatifs à l'ordre d'effacement de l'écran de la station autonome et FI3,n relatif à l'acceptation du service demandé (ici par FA3,n) sous réserve que l'authentification ultérieure (étapes E23 et E24) se déroule correctement.

En complément, la borne fixe BF émet le message BAS_CAP pour "Base Capabilities Information Element" relatif aux capacités téléphoniques de la station autonome validées par la borne fixe.

Lors de l'étape E23, la borne fixe génère un mot-clé aléatoire RAND et transmet ledit mot-clé aléatoire RAND vers la station autonome accompagné d'un mot numérique public de demande d'authentification AUTH_REQ.

En réponse au mot numérique de demande d'authentification AUTH_REG, les moyens de chiffrement/déchiffrement CDP de la station autonome chiffrent le mot-clé aléatoire RAND ainsi reçu à l'aide d'une clé particulière pour la station autonome. Par exemple, la clé particulière est formée par les données d'abonnement téléphonique secrètes relatives à la station autonome notamment son nombre d'identification personnel PIN pour "Personal Identification Number".

Ensuite, la station autonome envoie le mot-clé aléatoire CPIN ainsi chiffré vers la borne fixe BF accompagné d'un mot numérique public de réponse d'authentification AUTH_RES. La station autonome est considérées comme étant non authentique lorsque le chiffrement du mot aléatoire est nul, résultant de l'absence de données d'abonnement téléphonique secrètes PIN dans la mémoire de la station autonome.

Par contre, en présence de données d'abonnement téléphonique secrètes PIN dans la mémoire de la station autonome, l'étape E2 relative à l'authentification de la station autonome sera positive et aura pour résultat d'autoriser l'établissement de la liaison téléphonique.

Plus précisément, en réponse au mot numérique de réponse d'authentification AUTH_RES, les moyens de chiffrement/déchiffrement CDF du centre d'autorisation déchiffrent le mot-clé aléatoire chiffré CPIN ainsi reçu à l'aide de la clé particulière PIN, comparent le mot-clé aléatoire ainsi déchiffré avec celui généré par la borne fixe et autorisent l'établissement de la liaison téléphonique en fonction de la comparaison.

L'étape E3 consiste dans la numérotation de l'appel à partir du clavier de la station autonome.

Il est à remarquer ici que les trois étapes E1 à E3 sont déjà présentes dans la norme CAI actuelle.

Selon l'invention, à la suite de l'étape E3, il est prévu une étape E4 se déroulant de la façon suivante.

Tout d'abord, le centre d'autorisation reçoit de la borne fixe, l'identification de la station autonome désirant effectuer un premier appel. Cette identification concerne l'envoi de messages constitués par les mots PID, TCOS, OPSIC, TRD et LID. Ensuite, le centre d'autorisation détermine le service sollicité par l'intermédiaire des mots LID, FA3,n, et du numéro de téléphone désiré dans le cas d'un appel téléphonique (étape 41).

C'est en fonction du mot numérique de demande d'appel LID que le centre d'autorisation décide ou non de répondre à la demande d'appel émanant de la station autonome.

Très avantageusement, il est prévu selon l'invention de différencier le LID lorsqu'il s'agit d'une demande d'appel accompagnée d'une demande de chargement à distance des données téléphoniques.

Par exemple, il est prévu lorsque l'on souhaite un chargement à distance des données téléphoniques, d'entrer au clavier le LID particulier pour le chargement à distance des données d'abonnement téléphonique (génération manuelle du LID).

Il y a lieu de remarquer ici que la norme CAI prévoit que le LID s'étend sur quatre chiffres compris entre 0 et 7 c'est-à-dire entre 0000 et 03EF en hexadécimal.

Selon l'invention, il est prévu en outre de stocker dans la mémoire des moyens de traitement du centre d'autorisation une donnée indiquant que les données d'abonnement téléphonique doivent être chargées à distance dans la station autonome.

Tout d'abord, en réponse à une demande d'appel LID émanant de la station autonome accompagnée d'une identification de la station autonome PID et en présence d'un signal de demande de chargement vérifiant une condition prédéterminée relative au chargement à distance des données d'abonnement téléphonique (ici génération manuelle du LID), les moyens de commande recherchent toutes les données d'abonnement téléphonique relatives à la station autonome ainsi que celle indiquant l'ordre de chargement à distance (étape E43).

Ensuite, les moyens de chiffrement/déchiffrement CDF chiffrent à l'aide d'une clé particulière les données d'abonnement téléphonique secrètes (étape E44).

Enfin, les moyens de traitement UTF autorisent la transmission des données d'abonnement téléphonique publiques en clair ainsi que celles secrètes ainsi chiffrées vers ladite station autonome SP en fonction de la valeur de la donnée indiquant l'ordre de chargement à distance (étape E6).

Au contraire, lorsque le mot numérique public de demande d'appel LID est généré automatiquement, cela indique que la station autonome soit ne demande pas de données d'abonnement téléphonique, soit est déjà personnalisée.

En fonction du résultat d'une vérification d'authentification de la station autonome, les moyens de traitement du centre d'autorisation autorisent soit l'établissement de liaison téléphonique, soit ne donnent pas de suite à la demande d'appel de la station autonome (étape E5).

Plus précisément la demande de vérification d'authentification se déroule de la façon suivante.

En réponse au mot numérique de réponse d'authentification AUTH-RES, les moyens de chiffrement/déchiffrement CDF du centre d'autorisation déchiffrent le mot-clé aléatoire chiffré CPIN ainsi reçu à l'aide de la clé particulière PIN, comparent le mot-clé aléatoire ainsi déchiffré avec celui généré, et autorisent l'établissement de la liaison téléphonique en fonction de la comparaison.

L'étape E6 se déroule lorsque la valeur de la donnée représentative d'un ordre de téléchargement indique que la station autonome doit être chargée à distance.

Très avantageusement, la transmission des données d'abonnement téléphonique se divise en deux transmissions, l'une concernant les données d'abonnement téléphonique publiques et l'autre concernant les données d'abonnement téléphonique secrètes.

Lors de l'étape E61, la transmission du mot numérique TRD_ALLOC permet la transmission des données d'abonnement téléphonique publiques TRD.

De leur côté, les données d'abonnement téléphonique secrètes sont transmises par l'intermédiaire du mot numérique PIN_ALLOC.

Selon l'invention, les données d'abonnement téléphonique secrètes sont transmises chiffrées pour éviter l'interception frauduleuse desdites données secrètes.

Selon l'invention, le chiffrement des données d'abonnement téléphonique secrètes est réalisé par les moyens de chiffrement/déchiffrement de données du centre d'autorisation avec des moyens permettant la sélection d'une clé particulière pour ladite station autonome.

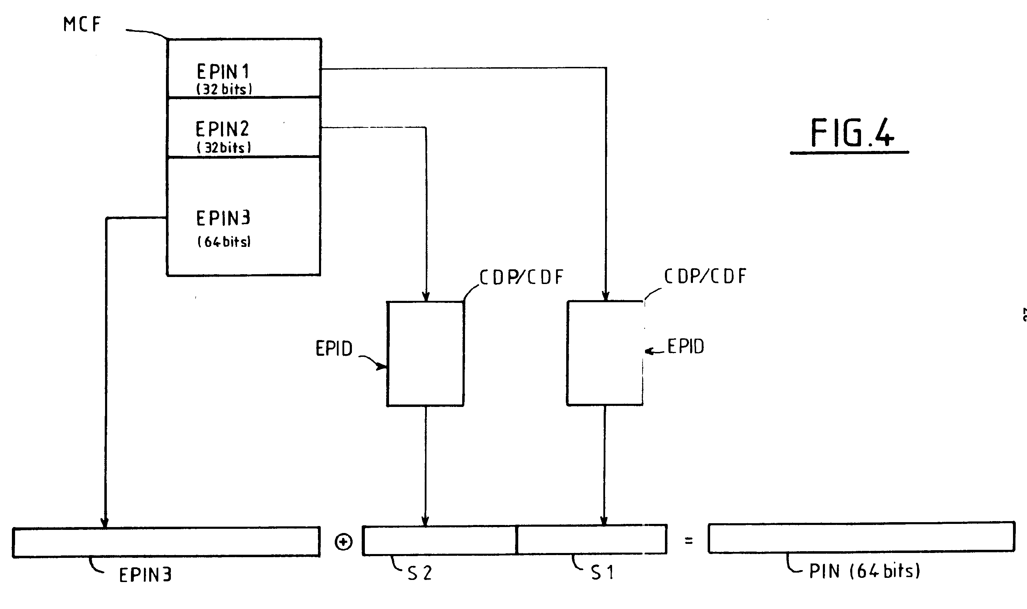

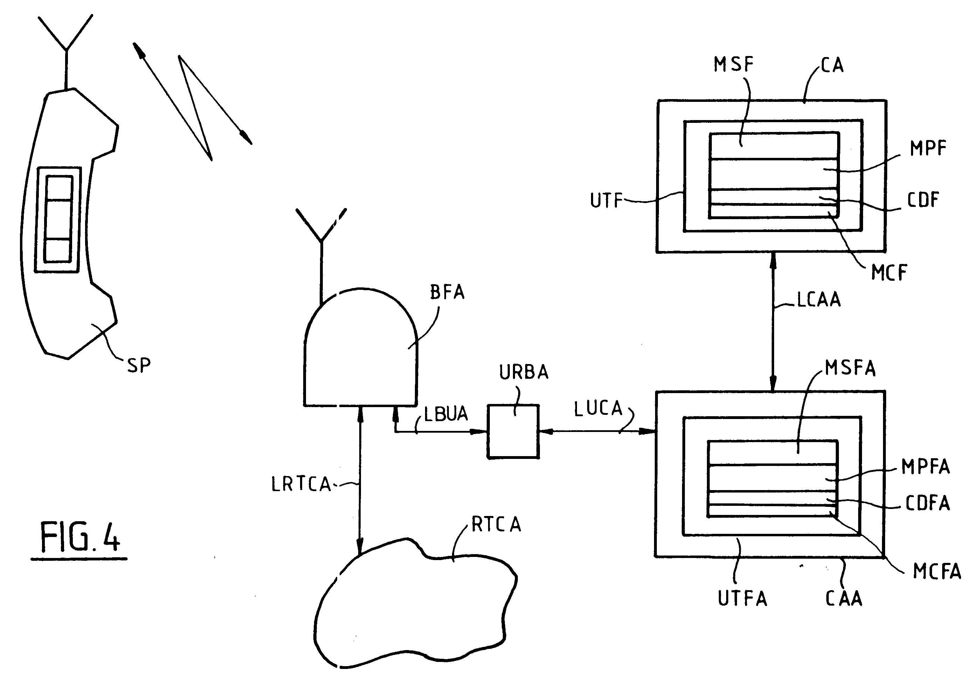

On se réfère maintenant à la figure 4.

Ici, la clé particulière secrète utilisée pour le chiffrement des données d'abonnement téléphonique secrètes est la clé EPID pour "Encrypted Portable Identification Data".

Bien entendu, cette clé particulière EPID pour la station autonome est résidante à la fois dans la station autonome SP et dans le centre d'autorisation CA.

En pratique, les moyens de commande du centre d'autorisation génèrent tout d'abord des premier et second nombres aléatoires EPIN1 et EPIN2 possédant une taille respective de 32 bits.

Ensuite, les moyens de chiffrement/déchiffrement CDF du centre d'autorisation calculent les transformés respectifs S1 et S2 desdits premier et second nombres aléatoires EPIN1 et EPIN2 par une fonction cryptographique F à l'aide de la clé secrète EPID.

Enfin, les moyens de commande génèrent le nombre d'identification personnel PIN (représentatif des données d'abonnement téléphonique secrètes) à l'aide de la somme du transformé S1 et du produit du transformé S2 par 2³², ce qui permet d'obtenir un PIN sur 64 bits.

Le cas échéant, les moyens de commande génèrent le PIN à l'aide en outre d'une donnée variable complémentaire EPIN3 d'une taille de 64 bits généré également par les moyens de commande et complétant le calcul précédent selon une somme OU EXCLUSIVE.

Ainsi, c'est la transmission des mots variables EPIN1, EPIN2 et EPIN3 (le cas échéant) qui permet de charger à distance, d'une façon chiffrée, les données d'abonnement téléphonique secrètes.

A la réception de ces mots EPIN1, EPIN2 et EPIN3 (le cas échéant), les moyens de chiffrement/déchiffrement de la station autonome calculent tout d'abord les transformés respectifs S1 et S2 des mots EPIN1 et EPIN2 par la fonction cryptographique F à l'aide de la clé secrète EPID. Enfin, ils effectuent un calcul pour récupérer les données d'abonnement secrètes PIN à l'aide de S1 et de S2 et de EPIN3 (le cas échéant).

Avantageusement, pour vérifier que les données d'abonnement téléphonique secrètes et publiques ont été correctement chargées à distance dans la station autonome, il est prévu tout d'abord une étape de demande d'authentification, étape E81, identique à l'étape précédemment décrite E23, c'est-à-dire qu'elle comprend l'envoi vers la station autonome d'un mot numérique de demande d'authentification AUTH_REQ accompagné d'un nombre aléatoire RAND.

En réponse au mot numérique de demande d'authentification AUTH_REQ, les moyens de chiffrement/déchiffrement CDP de la station autonome chiffrent le mot-clé aléatoire RAND ainsi reçu à l'aide des données d'abonnement téléphonique secrètes PIN relatives à la station autonome et précédemment transmises chiffrées par l'intermédiaire des mots EPIN1, EPIN2 et EPIN3 et déchiffrées par l'intermédiaire de la clé EPID.

Puis, la station autonome SP envoie le mot-clé aléatoire ainsi chiffré CPIN vers le centre d'autorisation CA accompagné du mot numérique de réponse d'authentification AUTH_RES. En réponse audit mot numérique de réponse d'authentification AUTH_RES, les moyens de chiffrement/déchiffrement du centre d'autorisation déchiffrent le mot-clé aléatoire chiffré CPIN ainsi reçu à l'aide de la clé particulière PIN. Enfin, le centre d'autorisation compare le mot-clé aléatoire ainsi déchiffré avec le mot-clé aléatoire ainsi généré (étape E82), et établit ainsi la liaison téléphonique en fonction de la comparaison (étape E9).

En pratique, il est prévu un mot numérique public USE sur un octet destiné à indiquer la nature des données. Par exemple le premier bit de l'octet concerne le chiffrement des données (0 pour non chiffré, 1 pour chiffré). Le second bit de l'octet concerne la nature de l'abonnement (0 pour principal, 1 pour auxiliaire, c'est-à-dire pour un service de ROAMING que l'on décrira plus en détail ci-après). Les autres bits sont mis à zéro pour le stockage des données dans les mémoires respectives de la station autonome.

Il est à remarquer que c'est le mot USE qui indique à la station autonome l'utilisation qu'elle doit faire du mot numérique public PIN_ALLOC.

Il est prévu également un mot numérique AUTH_NO sur un octet permettant d'indiquer à la station autonome laquelle de ses fonctions cryptographiques elle doit utiliser pour chiffrer/déchiffrer les données. Si la station autonome ne dispose que d'une fonction cryptographique, le mot AUTH_NO n'a pas d'effet.

Dans l'exemple de réalisation décrit ci-avant, c'est un mot de demande d'appel émanant de la station autonome LID saisi au clavier qui permet de déclencher le chargement à distance des données d'abonnement téléphonique publiques et secrètes via les messages PIN_ALLOC et TRD_ALLOC.

Dans cet exemple, un mot LID généré automatiquement par la station autonome lors du décrochage du combiné, ne permet pas le chargement à distance desdites données d'abonnement téléphonique.

Il en résulte que les données d'abonnement téléphonique ne sont transmises à distance que si l'utilisateur de la station autonome le souhaite (c'est-à-dire ici par une saisie au clavier du LID).

Pour des applications particulières telles que la modification d'au moins une partie des données d'abonnement téléphonique sans que la station autonome (ou son abonné) n'effectue aucun contrôle ou ne sollicite aucun service particulier, le signal de demande de chargement déclenchant le procédé de chargement à distance peut être une demande de chargement émanant des moyens d'autorisation.

Selon un autre mode de réalisation de l'invention, le procédé de chargement à distance des données d'abonnement téléphonique s'applique également à un service dit de "ROAMING" (c'est-à-dire une demande d'appel vers un réseau téléphonique commuté auxiliaire pour lequel la station autonome n'a pas d'abonnement) entre plusieurs exploitants POINTEL.

D'une façon générale, le service de ROAMING permet à un abonné d'une station autonome ayant souscrit chez un exploitant POINTEL un abonnement particulier, d'utiliser dans une certaine mesure le réseau commuté auxiliaire d'un autre exploitant POINTEL. Il est à remarquer ici que le service ROAMING n'est possible que lorsque toutes les données publiques et secrètes relatives à la station autonome sont disponibles à la fois au niveau de la station autonome et au niveau du centre d'autorisation.

Par contre, le centre d'autorisation auxiliaire gérant le réseau commuté auxiliaire ne possède pas les données d'abonnement téléphonique de ladite station autonome pour éviter les liaisons frauduleuses.

Or, jusqu'à présent, lorsque l'abonné d'une station autonome établit une communication chez un exploitant auxiliaire, le centre d'autorisation auxiliaire demande au centre d'autorisation principal un couple d'authentification classique constitué par un mot aléatoire et son transformé par une clé secrète qui est généralement formée par les données d'abonnement téléphonique secrètes de la station autonome, par exemple le nombre d'identification personnel PIN. Ce couple d'authentification permet ainsi l'authentification de la station autonome au niveau du centre auxiliaire.

Toutefois, l'authentification de la station autonome par ce procédé d'authentification n'est pas satisfaisant pour les raisons suivantes.

D'une part, les échanges entre les mémoires formant base de données pour chaque centre d'autorisation reviennent à un coût élevé dans la mesure ou ils sont relativement longs et systématiques lors de chaque appel.

D'autre part, ce procédé d'authentification n'est pas approprié aux réseaux téléphoniques commutés dans lesquels c'est la borne fixe qui possède une mémoire formant base de données pour assurer l'authentification des stations autonomes.

Le Demandeur s'est posé le problème de fournir un procédé de chargement à distance des données d'abonnement téléphonique dans un service de ROAMING permettant de remédier aux inconvénients mentionnés ci-avant.

Selon l'invention, le principe consistant à transmettre les données d'abonnement téléphonique secrètes PIN chiffrées conformément à l'invention décrite en référence aux figures 1 à 4 est appliqué pour la transmission du centre d'autorisation principal vers le centre d'autorisation auxiliaire des données d'abonnement téléphonique secrètes provisoires nécessaires au centre d'autorisation auxiliaire pour autoriser la liaison téléphonique entre la station autonome et le réseau téléphonique commuté auxiliaire.

Ainsi, les données d'abonnement téléphonique provisoires sont chiffrées avant transmission à l'aide d'une clé particulière pour la station autonome. Avantageusement, la clé particulière est formée des données d'abonnement téléphonique secrètes PIN qui sont résidantes à la fois dans la station autonome et dans le centre d'autorisation principal.

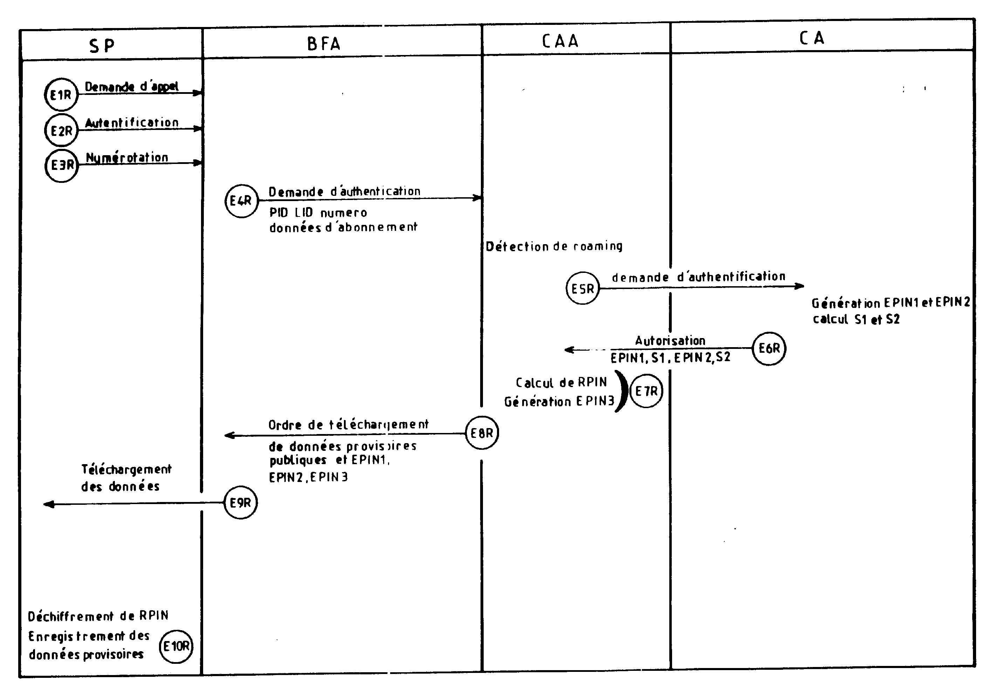

Sur la figure 5, on a représenté schématiquement une installation téléphonique dans laquelle la station autonome est en intercommunication téléphonique avec un réseau téléphonique commuté auxiliaire pour lequel la station autonome ne possède pas de données d'abonnement téléphonique (service dit ROAMING).

La station autonome SP est capable d'intercommunication à distance avec une installation téléphonique auxiliaire dont les éléments essentiels et constitutifs sont identiques à ceux de l'installation téléphonique décrite en référence à la figure 1 et portent les mêmes références accompagnées d'un suffixe A.

Le centre d'autorisation principal CA est raccordé au centre d'autorisation auxiliaire CAA via une liaison de signalisation numérique LCAA.

Dans un service de ROAMING, le chargement à distance des données d'abonnement téléphonique est possible seulement si le centre d'autorisation principal CA est raccordé au centre d'autorisation auxiliaire CAA via une liaison de signalisation numérique LCAA.

Il y a lieu de remarquer que le chargement à distance des données d'abonnement téléphonique est ici possible seulement si le centre d'autorisation auxiliaire a des accords avec le centre d'autorisation principal.

Sur la figure 6, on a représenté de façon schématique les étapes essentielles constitutives d'un protocole de chargement à distance des données d'abonnement téléphonique secrètes provisoires dans le cadre d'un service ROAMING.

Le début du protocole de chargement à distance dans le cadre d'un service ROAMING, constitué ici par les étapes E1R, E2R et E3R, est identique au début du protocole décrit en référence à la figure 3 (étapes E1, E2 et E3). Il n'en diffère que par l'actionnement de la touche ROAMING clôturant la composition du numéro d'appel téléphonique.

Après la demande d'appel provenant de la station autonome, (étapes E1R, E2R et E3R), la borne fixe effectue une demande d'authentification (étape E4R) auprès du centre d'autorisation auxiliaire CAA en vue d'établir une communication téléphonique avec le réseau commuté auxiliaire géré par ledit centre d'autorisation auxiliaire.

La demande d'autorisation pour établir la communication téléphonique relative à l'étape E4R est identique à la demande d'authentification décrite en référence à la figure 3 (étape E4R). Elle n'en diffère que par l'adjonction de l'information ROAMING.

Une fois que le centre d'autorisation auxiliaire a repéré qu'il s'agit d'une demande d'authentification auxiliaire, ledit centre d'autorisation auxiliaire effectue une demande d'authentification (étape E5R) destinée à demander l'autorisation au centre d'autorisation principal l'établissement d'une liaison téléphonique entre la station autonome et le réseau téléphonique commuté auxiliaire.

En réponse à la demande d'authentification (étape E5R) provenant du centre d'autorisation auxiliaire, les moyens de commande du centre d'autorisation génèrent tout d'abord des premier et second nombres aléatoires EPIN1 et EPIN2 possédant une taille respective de 32 bits.

Ensuite, les moyens de chiffrement/déchiffrement CDF du centre d'autorisation calculent les transformés respectifs S1 et S2 desdits premier et second nombres aléatoires EPIN1 et EPIN2 par une fonction cryptographique F à l'aide de la clé secrète PIN (représentatif des données d'abonnement téléphonique secrètes de la station autonome résidante dans la mémoire de la station autonome pour son fonctionnement (par exemple résidante par téléchargement selon le procédé conforme à l'invention).

Enfin, les moyens de traitement du centre d'autorisation autorisent la transmission des données variables EPIN1 et EPIN2 ainsi que leur transformé S1 et S2 vers le centre d'autorisation auxiliaire lorsque le mot numérique public de demande d'appel vérifie une condition prédéterminée relative à l'authentification de la station autonome (étape E6R).

Consécutivement à la transmission des données EPIN1, EPIN2, S1 et S2, les moyens de commande MCFA du centre d'autorisation auxiliaire génèrent des données d'abonnement téléphonique provisoires publiques et les transmettent vers la station autonome via la borne fixe auxiliaire BFA (étape E8R).

De plus, les moyens de commande MCFA génèrent le nombre identification personnel RPIN (représentatif des données d'abonnement téléphonique secrètent provisoires) à l'aide de la somme du transformé S1 et du produit du transformé S2 par 2³², ce qui permet d'obtenir un RPIN sur 64 bits (étape E7R).

Le cas échéant, les moyens de commande MCFA génèrent le RPIN à l'aide en outre d'une donnée variable complémentaire EPIN3 d'une taille de 64 bits généré également par les moyens de commande et complétant le calcul précédent selon une somme OU EXCLUSIVE.

Ainsi, d'une part c'est la transmission des mots variables EPIN1, EPIN2, et de leur transformé S1 et S2 qui permet de générer des données d'abonnement téléphonique provisoires secrètes au niveau des moyens d'autorisation auxiliaires. D'autre part, c'est la transmission des mots variables EPIN1, EPIN2 et de EPIN3 (le cas échéant) entre les moyens auxiliaires et la station autonome, qui permet le chargement à distance des données d'abonnement téléphonique provisoires secrètes.

A la réception de ces mots EPIN1, EPIN2 et EPIN3 (le cas échéant), les moyens de chiffrement/déchiffrement de la station autonome calculent tout d'abord les transformés respectifs S1 et S2 des mots EPIN1 et EPIN2 par la fonction cryptographique F à l'aide de la clé secrète PIN. Enfin, ils effectuent un calcul pour récupérer les données d'abonnement provisoires secrètes RPIN (étapes E9R, E10R).

Enfin, les données d'abonnement téléphonique provisoires publiques ainsi reçues en clair et secrètes ainsi déchiffrées sont stockées dans leurs mémoires recpectives (étape E10R).

Après l'étape E6R, le centre d'autorisation auxiliaire possède les données d'abonnement téléphonique secrètes provisoires RPIN permettant l'authentification de la station autonome. Il en résulte que l'interrogation systématique du centre d'autorisation auxiliaire auprès du centre d'autorisation principal pour permettre l'établissement de la liaison téléphonique n'est plus nécessaire.

Pour le reste, les étapes relatives à l'authentification de la station autonome auprès du centre d'autorisation auxiliaire sont identiques aux étapes relatives à l'authentification d'une station autonome auprès du centre d'autorisation principal. Elles n'en diffèrent que par la génération au niveau du centre d'autorisation auxiliaire des données d'abonnement téléphonique publiques provisoires.

Dans le cas où les moyens d'autorisation auxiliaires sont logés dans la borne fixe et sont reliés à un centre d'autorisation général auxiliaire, il peut être prévu, selon l'invention, d'équiper ladite borne fixe de moyens permettant d'interroger le centre d'autorisation général auxiliaire en vue de recevoir des données EPIN1, EPIN2, S1 et S2 permettant la génération des données d'abonnement téléphonique provisoires secrètes au niveau des moyens d'autorisation auxiliaires.

## Revendications

1. Installation téléphonique comprenant :
- au moins une borne fixe (BF) reliée à un réseau téléphonique commuté (RTC) ;
- au moins une station autonome (SP) capable d'une intercommunication à distance avec la borne fixe (BF), consécutivement à une demande d'appel de ladite station autonome (SP) ; la station autonome comportant des moyens de traitement (UTP) comprenant :
. une mémoire (MPP, MSP) destinée à stocker des données d'abonnement téléphonique relatives à la station autonome (SP), et
. des moyens de chiffrement/déchiffrement (CDP) de données ;
- des moyens d'autorisation (CA) reliés à la borne fixe (BF) et munis de moyens de traitement (UTF) propres à contrôler lesdites données d'abonnement téléphonique, en vue d'interdire l'établissement d'une liaison téléphonique,
caractérisée en ce que les moyens de traitement (UTF) des moyens d'autorisation comprennent :
- une mémoire (MPF, MSF) propre à contenir, en correspondance, des données d'abonnement téléphonique relatives à la station autonome et une donnée propre à indiquer que lesdites données d'abonnement téléphonique doivent être chargées à distance dans ladite station autonome ;
- des moyens de chiffrement/déchiffrement (CDF) des données à clés variables avec des moyens permettant la sélection d'au moins une clé particulière pour la station autonome ;
- des moyens de commande (MCF) propres à rechercher, sur commande, des données d'abonnement téléphonique par l'identification de la station autonome,
en ce qu'au niveau des moyens d'autorisation (CA),
. en réponse à un mot numérique public de demande d'appel (LID) émanant de la station autonome (SP) accompagné d'un mot numérique public d'identification de la station autonome (PID) et en présence d'un signal de demande de chargement vérifiant une condition prédéterminée relative au chargement à distance des données d'abonnement téléphonique, les moyens de commande (UTF) recherchent toutes les données d'abonnement téléphonique relatives à la station autonome (SP) ainsi que celle indiquant l'ordre de chargement à distance,
. en ce que les moyens de chiffrement/déchiffrement (CDF) chiffrent à l'aide de la clé particulière (EPID) celles qui sont secrètes (PIN),
. en ce que les moyens de traitement (UTF) autorisent la transmission des données d'abonnement téléphonique publiques en clair ainsi que celles secrètes ainsi chiffrées vers ladite station autonome (SP) en fonction de la valeur de la donnée indiquant l'ordre de chargement à distance,
tandis qu'au niveau de la station autonome (SP),
. les moyens de chiffrement/déchiffrement (CDP) déchiffrent les données d'abonnement téléphonique secrètes chiffrées ainsi reçues à l'aide de la clé particulière (EPID), et
. en ce que les moyens de traitement (UTP) stockent les données d'abonnement publiques ainsi transmises en clair et secrètes ainsi déchiffrées dans la mémoire de la station autonome (SP).

2. Installation selon la revendication 1, caractérisée en ce que le signal de demande de chargement est un signal émanant de la station autonome.

3. Installation selon la revendication 2, caractérisée en ce que le signal de demande de chargement émanant de la station autonome consiste à entrer au clavier de la station autonome (SP) le mot numérique public de demande d'appel (LID).

4. Installation selon la revendication 1, caractérisée en ce que le signal de demande de chargement est un signal émanant des moyens d'autorisation.

5. Installation selon l'une quelconque des revendications précédentes, caractérisée en ce que consécutivement à la transmission des données d'abonnement téléphonique publiques en clair et celles secrètes chiffrées, les moyens de traitement des moyens d'autorisation délivrent vers la station autonome un mot numérique public de demande d'authentification (AUTH_REQ) accompagné d'un mot-clé aléatoire (RAND) ;
en ce qu'en réponse au mot numérique de demande d'authentification (AUTH_REQ), les moyens de chiffrement/déchiffrement (CDP) de la station autonome chiffrent le mot-clé aléatoire ainsi reçu à l'aide de données d'abonnement téléphonique secrètes (PIN) ainsi chargées à distance et formant une clé supplémentaire particulière pour la station autonome,
en ce que la station autonome transmet ledit mot-clé aléatoire chiffré (CPIN) vers les moyens d'autorisation accompagné du mot numérique de réponse d'authentification (AUTH_RES), et
en ce qu'en réponse au mot numérique de réponse d'authentification (AUTH_RES), les moyens de chiffrement/déchiffrement (CDF) des moyens d'autorisation (CA) déchiffrent le mot-clé aléatoire chiffré (CPIN) ainsi reçu, comparent le mot-clé aléatoire ainsi déchiffré avec le mot-clé aléatoire généré, et en fonction de la comparaison stockent une donnée indiquant que les données d'abonnement téléphonique sont chargées dans la station autonome ainsi qu'établissent la liaison téléphonique.

6. Installation selon l'une quelconque des revendications précédentes, caractérisée en ce que les données d'abonnement téléphonique secrètes comprennent le nombre d'identification personnel de la station autonome (PIN).

7. Installation selon l'une quelconque des précédentes revendications, caractérisée en ce que les données d'abonnement téléphonique publiques comprennent le mot numérique public de demande d'appel (LID), le mot numérique d'identification de l'opérateur (OPSIC), le mot numérique relatif à la classe de service de la station autonome (TCOS) et les données numériques d'abonnement (TRD).

8. Installation selon la revendication 6, caractérisée en ce que les moyens de chiffrement/déchiffrement chiffrent/déchiffrent le nombre d'identification personnel de la station autonome (PIN) en fonction de données variables (EPIN1, EPIN2) et de leur transformé (S1, S2) par une fonction cryptographique F à l'aide de la clé particulière (EPID).

9. Installation selon la revendication 6, caractérisée en ce que les moyens de chiffrement/déchiffrement chiffrent/déchiffrent le nombre d'identification personnel de la station autonome (PIN) en fonction de données variables (EPIN1, EPIN2), de leur transformé (S1, S2) par une fonction cryptographique F à l'aide de la clé particulière (EPID) et d'une donnée variable supplémentaire (EPIN3).

10. Installation selon l'une quelconque des revendications précédentes, dans laquelle la station autonome est capable d'intercommunication à distance avec un réseau téléphonique commuté auxiliaire dont les moyens d'autorisation auxiliaires (CAA) sont reliés aux moyens d'autorisation (CA) en vue de permettre l'échange de données avec lesdits moyens d'autorisation (CA), caractérisée en ce que les moyens de traitement (UTFA) des moyens d'autorisation auxiliaires comprennent :
- une mémoire (MPFA, MSFA) propre à contenir des données d'abonnement téléphonique provisoires relatives à la station autonome ;
- des moyens de commande (MCFA) propres à générer des données d'abonnement téléphonique provisoires pour la station autonome ; et
en ce qu'au niveau des moyens d'autorisation (CA),
. en réponse à un mot numérique public de demande de raccordement (ROAMING) avec le réseau téléphonique auxiliaire (CAA), les moyens de traitement génèrent des données variables (EPIN1, EPIN2) et calculent leur transformé (S1, S2) à l'aide d'une clé particulière (PIN) formée à partir de données d'abonnement téléphonique secrètes lorsque le mot numérique public de demande de raccordement (ROAMING) vérifie une condition prédéterminée relative à l'authentification de la station autonome par les moyens d'autorisation,
. en ce que les moyens de traitement (UTF) transmettent les données variables (EPIN1, EPIN2) et leur transformé (S1, S2) ainsi calculés vers les moyens d'autorisation auxiliaires (CAA) ;
en ce qu'au niveau des moyens d'autorisation auxiliaires,
. les moyens de commande (MCFA) génèrent des données d'abonnement téléphonique publiques provisoires ;
. en ce que les moyens de commande génèrent des données d'abonnement téléphonique secrètes provisoires (RPIN) et les chiffrent à l'aide des variables (EPIN1, EPIN2) et leur transformé (S1, S2) ainsi reçus ;
. en ce que les moyens de traitement (UTFA) transmettent les données d'abonnement téléphonique secrètes provisoires ainsi chiffrées vers la station autonome accompagnées desdites données d'abonnement téléphonique provisoires publiques ainsi générées ; et
en ce qu'au niveau de la station autonome (SP),
. les moyens de chiffrement/déchiffrement (CDP) déchiffrent les données d'abonnement téléphonique secrètes provisoires chiffrées ainsi reçues à l'aide de la clé particulière (PIN) formée à partir de données d'abonnement téléphonique secrètes, et
. en ce que les moyens de traitement (UTF) stockent les données d'abonnement téléphonique publiques provisoires ainsi reçues en clair et secrètes ainsi déchiffrées dans la mémoire (MPP, MSP).

11. Installation selon la revendication 10, caractérisée en ce que les données d'abonnement téléphonique secrètes provisoires comprennent le nombre d'identification personnel provisoire de la station autonome (RPIN).

12. Installation selon l'une quelconque des revendications 10 et 11, caractérisée en ce que les données d'abonnement téléphonique publiques provisoires comprennent le mot numérique public de demande d'appel (LID), le mot numérique d'identification de l'opérateur (OPSIC), le mot numérique relatif à la classe de service de la station autonome (TCOS) et les données numériques d'abonnement (TRD).

13. Installation selon la revendication 11, caractérisée en ce que les moyens de chiffrement/déchiffrement chiffrent/déchiffrent le nombre d'identification personnel provisoire de la station autonome (RPIN) en fonction de données variables (EPIN1, EPIN2) et de leur transformé (S1, S2) par une fonction cryptographique F à l'aide de la clé particulière (PIN).

14. Installation selon la revendication 11, caractérisée en ce que les moyens de chiffrement/déchiffrement chiffrent/déchiffrent le nombre d'identification personnel provisoire de la station autonome (RPIN) en fonction de données variables (EPIN1, EPIN2), de leur transformé (S1, S2) par une fonction cryptographique F à l'aide de la clé particulière (PIN) et d'une donnée variable supplémentaire (EPIN3) générée par les moyens de commande des moyens d'autorisation auxiliaires.

15. Installation selon l'une quelconque des revendications précédentes, caractérisée en ce que les moyens d'autorisation (CA) ou les moyens d'autorisation auxiliaires (CAA) correspondent à un centre d'autorisation général pour l'ensemble des stations autonomes et des bornes fixes du réseau commuté (RTC) ou du réseau commuté auxiliaire (STCA).

16. Installation selon l'une des revendications 1 à 14, caractérisée en ce que les moyens d'autorisation (CA) ou les moyens d'autorisation auxiliaires (CAA) sont logés dans la borne fixe et sont reliés à un centre d'autorisation général pour l'ensemble des stations autonomes et des bornes fixes du réseau commuté (RTC) ou du réseau commuté auxiliaire (RTCA).

17. Procédé pour le chargement à distance de données d'abonnement téléphonique destiné à servir dans une installation téléphonique comprenant :
- au moins une borne fixe (BF) reliée à un réseau téléphonique commuté (RTC) ;
- au moins une station autonome (SP) capable d'une intercommunication à distance avec la borne fixe (BF), consécutivement à une demande d'appel de ladite station autonome (SP) ; la station autonome comportant des moyens de traitement (UTP) comprenant :
. une mémoire (MPP, MSP) destinée à stocker des données d'abonnement téléphonique relatives à la station autonome (SP), et
. des moyens de chiffrement/déchiffrement (CDP) de données ;
- des moyens d'autorisation (CA) reliés à la borne fixe (BF) et munis de moyens de traitement (UTF) propres à contrôler lesdites données d'abonnement téléphonique, en vue d'interdire l'établissement d'une liaison téléphonique,
selon l'une quelconque des revendications 1 à 9 et 15 et 16, caractérisé en ce qu'il est prévu d'équiper les moyens de traitement (UTF) des moyens d'autorisation (CA) :
- d'une mémoire (MPF, MSF) propres à contenir, en correspondance, des données d'abonnement téléphonique relatives à la station autonome et d'une donnée propre à indiquer que lesdites données d'abonnement téléphonique doivent être chargées à distance dans ladite station autonome ;
- des moyens de chiffrement/déchiffrement (CDF) des données à clés variables avec des moyens permettant la sélection d'au moins une clé particulière pour la station autonome ;
- de moyens de commande (MCF) propres à rechercher sur commande des données d'abonnement téléphonique par l'identification de la station autonome ;
et en ce qu'il comprend les étapes suivantes :
a) au niveau des moyens d'autorisation (CA),
. a1) en réponse à un mot numérique public de demande d'appel (LID) émanant de la station autonome (SP) accompagné d'un mot numérique public d'identification de la station autonome (PID) et en présence d'un signal de commande vérifiant une condition prédéterminée relative au chargement à distance des données d'abonnement téléphonique, rechercher toutes les données d'abonnement téléphonique relatives à la station autonome (SP) ainsi que celle indiquant l'ordre de chargement à distance,
. a2) chiffrer à l'aide de la clé particulière (EPID) celles qui sont secrètes (PIN),
. a3) autoriser la transmission des données d'abonnement téléphonique publiques en clair ainsi que celles secrètes ainsi chiffrées vers ladite station autonome (SP) en fonction de la valeur de la donnée indiquant l'ordre de chargement à distance,
b) au niveau de la station autonome (SP),
. b1) déchiffrer les données d'abonnement téléphonique secrètes chiffrées ainsi reçues à l'aide de la clé particulière (EPID),
. b2) stocker les données d'abonnement publiques ainsi transmises en clair et secrètes ainsi déchiffrées dans la mémoire de la station autonome (SP).

18. Procédé de chargement à distance de données d'abonnement téléphonique destiné à servir dans une installation téléphonique, comprenant :
- au moins une borne fixe (BF) reliée à un réseau téléphonique commuté (RTC) ;
- au moins une station autonome (SP) capable d'une intercommunication à distance avec la borne fixe (BF), consécutivement à une demande d'appel de ladite station autonome (SP) ; la station autonome comportant des moyens de traitement (UTP) comprenant :
. une mémoire (MPP, MSP) destinée à stocker des données d'abonnement téléphonique relatives à la station autonome (SP), et
. des moyens de chiffrement/déchiffrement (CDP) de données ;
- des moyens d'autorisation (CA) reliés à la borne fixe (BF) et munis de moyens de traitement (UTF) propres à contrôler lesdites données d'abonnement téléphonique, en vue d'interdire l'établissement d'une liaison téléphonique,
selon l'une quelconque des revendications 10 à 16, dans laquelle la station autonome est capable d'intercommunication à distance avec un réseau téléphonique commuté auxiliaire dont les moyens d'autorisation auxiliaires (CAA), sont reliés aux moyens d'autorisation (CA) en vue de permettre l'échange de données avec lesdits moyens d'autorisation (CA),
caractérisé en ce qu'il est prévu d'équiper les moyens de traitement (UTFA) des moyens d'autorisation auxiliaires :
- d'une mémoire (MPFA, MSFA) propre à contenir des données d'abonnement téléphonique provisoires relatives à la station autonome ;
- de moyens de commande (MCFA) propres à générer des données d'abonnement téléphonique publiques provisoires pour la station autonome ; et
en ce qu'il comprend les étapes suivantes :
1) au niveau des moyens d'autorisation (CA),
. 11) en réponse à un mot numérique public de demande de raccordement (ROAMING) avec le réseau téléphonique auxiliaire émanant des moyens d'autorisation auxiliaires (CAA), générer des données variables (EPIN1, EPIN2), calculer leur transformé (S1, S2) à l'aide d'une clé particulière (PIN) formée à partir de données d'abonnement téléphonique secrètes lorsque le mot numérique public de demande de raccordement (ROAMING) vérifie une condition prédéterminée relative à l'authentification de la station autonome par les moyens d'autorisation,
. 12) transmettre les données variables (EPIN1, EPIN2) et leur transformé ainsi calculés vers les moyens d'autorisation auxiliaires (CAA),
2) au niveau des moyens d'autorisation auxiliaires,
. 21) générer des données d'abonnement téléphonique publiques provisoires,
. 22) générer des données d'abonnement téléphonique secrètes provisoires (RPIN) et les chiffrer à l'aide des données variables (EPIN1, EPIN2) et de leur transformé (S1, S2),
. 23) transmettre les données d'abonnement téléphonique secrètes provisoires ainsi chiffrées vers la station autonome accompagnées desdites données d'abonnement téléphonique provisoires publiques ainsi générées ;
3) au niveau de la station autonome (SP),
. 31) déchiffrer les données d'abonnement téléphonique secrètes provisoires chiffrées ainsi reçues à l'aide de la clé particulière (PIN) formée à partir de donnée d'abonnement téléphonique secrètes, et
. 32) stocker les données d'abonnement téléphonique publiques provisoires ainsi reçues en clair et secrètes ainsi déchiffrées dans la mémoire (MPP, MSP).

19. Procédé selon la revendication 18, caractérisé en ce que l'étape 22 comprend en outre les étapes suivantes :
*221) générer une donnée variable supplémentaire (EPIN3) et chiffrer les données d'abonnement téléphonique à l'aide en outre de ladite donnée variable complémentaire (EPIN3).

## Patentansprüche

1. Fernsprechanlage, umfassend:
- mindestens einen feststehenden Anschluß (BF), der mit einem Fernsprechwählnetz (RTC) verbunden ist;
- mindestens eine unabhängige Sprechstelle (SP), die auf eine Gesprächsanforderung dieser unabhängigen Sprechstelle (SP) hin mit dem feststehenden Anschluß (BF) fernverbindbar ist; wobei die unabhängige Sprechstelle Verarbeitungsmittel (UTP) aufweist, die folgendes umfassen:
. einen Speicher (MPP, MSP), der dazu bestimmt ist, die unabhängige Sprechstelle (SP) betreffende Fernsprechanschlußdaten zu speichern, und
. Mittel (CDP) zum Chiffrieren/Dechiffrieren von Daten;
- Zulassungsmittel (CA), die mit dem feststehenden Anschluß (BF) verbunden sind und mit Verarbeitungsmitteln (UTF) versehen sind, die geeignet sind, diese Fernsprechanschlußdaten zum Zweck der Sperrung der Herstellung einer Fernsprechverbindung zu kontrollieren,
dadurch gekennzeichnet, daß die Verarbeitungsmittel (UTF) der Zulassungsmittel folgendes umfassen:
- einen Speicher (MPF, MSF), der geeignet ist, in Entsprechung die unabhängige Sprechstelle betreffende Fernsprechanschlußdaten und eine Information zu enthalten, die geeignet ist, anzugeben, daß diese Fernsprechanschlußdaten in diese unabhängige Sprechstelle ferngeladen werden müssen;
- Mittel zum Chiffrieren/Dechiffrieren (CDF) der variablen Schlüsseldaten mit Mitteln, die die Wahl mindestens eines eigenen Schlüssels für die unabhängige Sprechstelle gestatten;
- Steuermittel (MCF), die geeignet sind, auf Anforderung Fernsprechanschlußdaten durch Identifizierung der unabhängigen Sprechstelle zu suchen,
daß in Höhe der Zulassungsmittel (CA)
. als Antwort auf ein öffentliches digitales Gesprächsanforderungswort (LID), das von der unabhängigen Sprechstelle (SP) ausgeht und von einem öffentlichen digitalen Wort (PID) zur Identifizierung der unabhängigen Sprechstelle begleitet ist, und bei Auftreten eines Ladungsanforderungssignals, das eine vorbestimmte, die Fernladung der Fernsprechanschlußdaten betreffende Bedingung überprüft, die Steuermittel (UTF) alle die unabhängige Sprechstelle (SP) betreffenden Fernsprechanschlußdaten sowie die den Fernladungsbefehl angebende Information suchen,
. daß die Chiffrier/Dechiffriermittel (CDF) mit Hilfe des eigenen Schlüssels (EPID) die Daten chiffrieren, die geheim sind (PIN),
. daß die Verarbeitungsmittel (UTF) die Übertragung der unverschlüsselten öffentlichen sowie der auf diese Weise chiffrierten geheimen Fernsprechanschlußdaten zu dieser unabhängigen Sprechstelle (SP) in Abhängigkeit von dem Wert der den Fernladungsbefehl angebenden Information zulassen,
während in Höhe der unabhängigen Sprechstelle (SP)
. die Chiffrier/Dechiffriermittel (CDP), die auf diese Weiseempfangenen chiffrierten geheimen Fernsprechanschlußdaten mit Hilfe des eigenen Schlüssels (EPID) chiffrieren und
. daß die Verarbeitungsmittel (UTP) die so übertragenen unverschlüsselten öfentlichen und so dechiffrierten geheimen Anschlußdaten im Speicher der unabhängigen Sprechstelle (SP) speichern.

2. Anlage nach Anspruch 2, dadurch gekennzeichnet, daß das Ladungsanforderungssignal ein von der unabhängigen Sprechstelle ausgehendes Signal ist.

3. Anlage nach Anspruch 2, dadurch gekennzeichnet, daß das von der unabhängigen Sprechstelle ausgehende Ladungsanforderungssignal darin besteht, daß der Tastatur der unabhängigen Sprechstelle (SP) das öffentliche digitale Gesprächsanforderungswort (LID) eingegeben wird.

4. Anlage nach Anspruch 1, dadurch gekennzeichnet, daß das Ladungsanforderungssignal ein von den Zulassungsmitteln ausgehendes Signal ist.

5. Anlage nach einem der vorhergehenden Ansprüche, dadurch gekennzeichnet, daß die Verarbeitungsmittel der Zulassungsmittel auf die Übertragung der unverschlüsselten öffentlichen und der chiffrierten geheimen Fernsprechanschlußdaten hin der unabhängigen Sprechstelle ein öffentliches digitales Authentifizierungsanforderungswort (AUTH_REQ) liefern, das von einem zufälligen Schlüsselwort (RAND) begleitet ist;
daß die Chiffrier/Dechiffriermittel (CDP) der unabhängigen Sprechstelle als Antwort auf das digitale Authentifizierungsanforderungswort (AUTH_REQ) das auf diese Weise empfangene zufällige Schlüsselwort mit Hilfe von geheimen Fernsprechanschlußdaten (PIN) chiffrieren, die auf diese Weise ferngeladen wurden und einen zusätzlichen eigenen Schlüssel für die unabhängige Sprechstelle bilden,
daß die unabhängige Sprechstelle dieses chiffrierte zufällige Schlüsselwort (CPIN), das von dem digitalen Authentifizierungsantwortswort (AUTH_RES) begleitet ist, zu den Zulassungsmitteln überträgt, und
daß die Chiffrier/Dechiffriermittel (CDF) der Zulassungsmittel (CA) als Antwort auf das digitale Authentifizierungsantwortswort (AUTH_RES) das auf diese Weise empfangene chiffrierte zufällige Schlüsselwort (CPIN) dechiffrieren, das auf diese Weise dechiffrierte zufällige Schlüsselwort mit dem erzeugten zufälligen Schlüsselwort verglichen und in Abhängigkeit von dem Vergleich eine Information speichern, die angibt, daß die Fernsprechanschlußdaten in die unabhängige Sprechstelle geladen sind, sowie die Fernsprechverbindung herstellen.

6. Anlage nach einem der vorhergehenden Ansprüche, dadurch gekennzeichnet, daß die geheimen Fernsprechanschlußdaten die persönliche Identifizierungszahl der unabhängigen Sprechstelle umfassen.

7. Anlage nach einem der vorhergehenden Ansprüche, dadurch gekennzeichnet, daß die öffentlichen Fernsprechanschlußdaten das öffentliche digitale Gesprächsanforderungswort (LID), das digitale Wort zur Identifizierung des Operators (OPSIC), das die Betriebsklasse der unabhängigen Sprechstelle betreffende digitale Wort (TCOS) und die digitalen Anschlußdaten (TRD) umfassen.

8. Anlage nach Anspruch 6, dadurch gekennzeichnet, daß die Chiffrier/Dechiffriermittel die persönliche Identifizierungszahl der unabhängigen Sprechstelle (PIN) in Abhängigkeit von variablen Daten (EPIN1, EPIN2) und ihrer Transformierten (S1, S2) durch eine Verschlüsselungsfunktion F mit Hilfe des eigenen Schlüssels (EPID) chiffrieren/dechiffrieren.

9. Anlage nach Anspruch 6, dadurch gekennzeichnet, daß die Chiffrier/Dechiffriermittel die persönliche Identifizierungszahl der unabhängigen Sprechstelle (PIN) in Abhängigkeit von variablen Daten (EPIN1, EPIN2), ihrer Transformierten (S1, S2) durch eine Verschlüsselungsfunktion F mit Hilfe des eigenen Schlüssels (EPID) und einer zusätzlichen variablen Information (EPIN3) chiffrieren/dechiffrieren.

10. Anlage nach einem der vorhergehenden Ansprüche, in der die unabhängige Sprechstelle mit einem Nebenfernsprechwählnetz fernverbindbar ist, dessen Nebenzulassungsmittel (CAA) mit den Zulassungsmitteln (CA) verbunden sind, um den Datenaustausch mit diesen Zulassungsmitteln (CA) zu gestatten, dadurch gekennzeichnet, daß die Verarbeitungsmittel (UTFA) der Nebenzulassungsmittel folgendes umfassen:
- einen Speicher (MPFA, MSFA), der geeignet ist, die unabhängige Sprechstelle betreffende provisorische Fernsprechanschlußdaten zu enthalten;
- Steuermittel (MCFA), die geeignet sind, provisorische Fernsprechanschlußdaten für die unabhängige Sprechstelle zu erzeugen; und
daß in Höhe der Zulassungsmittel (CA),
. die Verarbeitungsmittel als Antwort auf ein öffentliches Wort zur Anforderung der Verbindung (ROAMING) mit dem Nebenfernsprechnetz (CAA) variable Daten (EPIN1, EPIN2) erzeugen und ihre Transformierte (S1, S2) mit Hilfe eines eigenen Schlüssels, der aus geheimen Fernsprechanschlußdaten gebildet ist, errechnen, wenn das öffentliche digitale Anschlußanforderungswort (ROAMING) eine vorbestimmte, die Authentifizierung der unabhängigen Sprechstelle durch die Zulassungsmittel betreffende Bedingung nachweist,
. daß die Verarbeitungsmittel (UTF) die auf diese Weise errechneten variablen Daten (EPIN1, EPIN2) und ihre Transformierte (S1, S2) zu den Nebenzulassungsmitteln (CAA) übertragen;
daß in Höhe der Nebenzulassungsmittel
. die Steuermittel (MCFA) provisorische öffentliche Fernsprechanschlußdaten erzeugen;
. daß die Steuermittel provisorische geheime Fernsprechanschlußdaten (RPIN) erzeugen und sie mit Hilfe der auf diese Weise erhaltenen Variablen (EPIN1, EPIN2) und ihrer Transformierten (S1, S2) chiffrieren;
. daß die Verarbeitungsmittel (UTFA) die auf diese Weise chiffrierten provisorischen geheimen Anschlußdaten in Begleitung von diesen auf diese Weise erzeugten öffentlichen provisorischen Fernsprechanschlußdaten zur unabhängigen Sprechstelle übertragen; und
daß in Höhe der unabhängigen Sprechstelle (SP),
. die Chiffrier/Dechiffriermittel (CDP), die auf diese Weise erhaltenen chiffrierten provisorischen geheimen Fernsprechanschlußdaten mit Hilfe des aus geheimen Fernsprechanschlußdaten gebildeten eigenen Schlüssels (PIN) dechiffrieren und
. daß die Verarbeitungsmittel (UTF) die auf diese Weise erhaltenen unchiffrierten provisorischen öffentlichen und auf diese Weise dechiffrierten geheimen Fernsprechanschlußdaten im Speicher (MPP, MSP) speichern.

11. Anlage nach Anspruch 10, dadurch gekennzeichnet, daß die provisorischen geheimen Fernsprechanschlußdaten die provisorische persönliche Identifizierungszahl der unabhängigen Sprechstelle (RPIN) umfassen.

12. Anlage nach einem der Ansprüche 10 und 11, dadurch gekennzeichnet, daß die provisorischen öffentlichen Fernsprechanschlußdaten das öffentliche digitale Gesprächsanforderungswort (LID), das digitale Wort zur Identifizierung des Operators (OPSIC), das sich auf die Betriebsklasse der unabhängigen Sprechstelle beziehende digitale Wort (TCOS) und die digitalen Anschlußdaten (TRD) umfassen.

13. Anlage nach Anspruch 11, dadurch gekennzeichnet, daß die Chiffrier/Dechiffriermittel die provisorische persönliche Identifizierungszahl der unabhängigen Sprechstelle (RPIN) in Abhängigkeit von variablen Daten (EPIN1, EPIN2) und ihrer Transformierten (S1, S2) durch eine Verschlüsselungsfunktion F mit Hilfe des eigenen Schlüssels (PIN) chiffrieren/dechiffrieren.

14. Anlage nach Anspruch 11, dadurch gekennzeichnet, daß die Chiffrier/Dechiffriermittel die provisorische persönliche Identifizierungszahl (RPIN) der unabhängigen Sprechstelle in Abhängigkeit von variablen Daten (EPIN1, EPIN2), ihrer Transformierten (S1, S2) durch eine Verschlüsselungsfunktion F mit Hilfe des eigenen Schlüssels (PIN) und einer zusätzlichen variablen Information (EPIN3) chiffrieren/dechiffrieren, die durch die Steuermittel der Nebenzulassungsmittel erzeugt wurden.

15. Anlage nach einem der vorhergehenden Ansprüche, dadurch gekennzeichnet, daß die Zulassungsmittel (CA) oder die Nebenzulassungsmittel (CAA) einer Hauptzulassungsstelle für alle unabhängigen Sprechstellen und feststehende Anschlüsse des Wählnetzes (RTC) oder des Nebenwählnetzes (STCA) entsprechen.

16. Anlage nach einem der Ansprüche 1 bis 14, dadurch gekennzeichnet, daß die Zulassungsmittel (CA) oder die Nebenzulassungsmittel (CAA) im feststehenden Anschluß aufgenommen sind und mit einer Hauptzulassungsstelle für alle unabhängigen Sprechstellen und feststehenden Anschlüsse des Wählnetzes (RTC) oder des Nebenwählnetzes (RTCA) verbunden sind.

17. Verfahren zum Fernladen von Fernsprechanschlußdaten, das dazu bestimmt ist, in einer Fernsprechanlage durchgeführt zu werden, die folgendes umfaßt:
- mindestens einen feststehenden Anschluß (BF), der mit dem Fernsprechwählnetz (RTC) verbunden ist;
- mindestens eine unabhängige Sprechstelle (SP), die auf eine Gesprächsanforderung der unabhängigen Sprechstelle (SP) hin mit dem feststehenden Anschluß (BF) fernverbindbar ist; wobei die unabhängige Sprechstelle Verarbeitungsmittel (UTP) umfaßt, die folgendes umfassen:
. einen Speicher (MPP, MSP), der dazu bestimmt ist, sich auf die unabhängige Sprechstelle (SP) beziehende Fernsprechanschlußdaten zu speichern, und
. Mittel (CDP) zum Chiffrieren/Dechiffrieren von Daten;
- Zulassungsmittel (CA), die mit dem feststehenden Anschluß (BF) verbunden sind und mit Verarbeitungsmitteln (UTF) versehen sind, die geeignet sind, diese Fernsprechanschlußdaten zum Zweck der Sperrung der Herstellung einer Fernsprechverbindung zu kontrollieren,
nach einem der Ansprüche 1 bis 9, 15 und 16, dadurch gekennzeichnet, daß vorgesehen ist, die Verarbeitungsmittel (UTF) der Zulassungsmittel (CA) mit folgenden Mitteln zu versehen:
- einem Speicher (MPF, MSF), der geeignet ist, in Entsprechung sich auf die unabhängige Sprechstelle beziehende Fernsprechanschlußdaten und eine Information zu enthalten, die geeignet ist, anzugeben, daß diese Fernsprechanschlußdaten in diese unabhängige Sprechstelle ferngeladen werden müssen;
- Mittel (CDF) zum Chiffrieren/Dechiffrieren der variablen Schlüsseldaten mit Mittel, die die Wahl mindestens eines eigenen Schlüssels für die unabhängige Sprechstelle gestatten;
- Steuermittel (MCF), die geeignet sind, auf Anforderung Fernsprechanschlußdaten durch Identifizierung der unabhängigen Sprechstelle zu suchen;
und daß es aus den folgenden Schritten besteht:
a) in Höhe der Zulassungsmittel (CA),
. a1) als Antwort auf ein von der unabhängigen Sprechstelle (SP) kommendes öffentliches digitales Gesprächsanforderungswort (LID) in Begleitung von einem öffentlichen digitalen Wort zur Identifizierung der unabhängigen Sprechstelle (PID), und bei Auftreten eines Steuersignals, das eine die Fernladung der Fernsprechanschlußdaten betreffende vorbestimmte Bedingung nachweist, alle sich auf die unabhängige Sprechstelle (SP) beziehende Fernsprechanschlußdaten sowie die den Fernladungsbefehl angebende Information suchen,
. a2) mit Hilfe des eigenen Schlüssels (EPID) diejenigen Daten chiffrieren, die geheim sind (PIN),
. a3) die Übertragung der unverschlüsselten öffentlichen sowie der auf diese Weise chiffrierten geheimen Fernsprechanschlußdaten in Abhängigkeit von dem Wert der den Fernladungsbefehl angebenden Information zur unabhängigen Sprechstelle (SP) zulassen,
b) in Höhe der unabhängigen Sprechstelle (SP),
. b1) die auf diese Weise erhaltenen chiffrierten geheimen Fernsprechanschlußdaten mit Hilfe des eigenen Schlüssels (EPID) dechiffrieren,
. b2) die auf diese Weise übertragenen unverschlüsselten öffentlichen und so dechiffrierten geheimen Anschlußdaten im Speicher der unabhängigen Sprechstelle (SP) speichern.

18. Verfahren zum Fernladen von Fernsprechanschlußdaten, das dazu bestimmt ist, in einer Fernsprechanlage durchgeführt zu werden, die folgendes umfaßt:
- mindestens einen feststehenden Anschluß (BF), der mit dem Fernsprechwählnetz (RTC) verbunden ist;
- mindestens eine unabhängige Sprechstelle (SP), die auf eine Gesprächsanforderung dieser unabhängigen Sprechstelle (SP) hin mit dem feststehenden Anschluß (BF) fernverbindbar ist; wobei die unabhängige Sprechstelle Behandlungsmittel (UTP) umfaßt, die folgendes umfassen:
. einen Speicher (MPP, MSP), der dazu bestimmt ist, sich auf die unabhängige Sprechstelle (SP) beziehende Fernsprechanschlußdaten zu speichern, und
. Mittel (CDP) zum Chiffrieren/Dechiffrieren von Daten;
- Zulassungsmittel (CA), die mit dem feststehenden Anschluß (BF) verbunden sind und mit Verarbeitungsmitteln (UTF) versehen sind, die geeignet sind, diese Fernsprechanschlußdaten zum Zweck der Sperrung der Herstellung einer Fernsprechverbindung zu kontrollieren,
nach einem der Ansprüche 10 bis 16, in der die unabhängige Sprechstelle mit einem Nebenfernsprechwählnetz fernverbindbar ist, deren Nebenzulassungsmittel (CAA) mit den Zulassungsmitteln (CA) verbunden sind, um den Austausch von Daten mit diesen Zulassungsmitteln (CA) zu gestatten,
dadurch gekennzeichnet, daß vorgesehen ist, die Verarbeitungsmittel (UTFA) der Nebenzulassungsmittel mit folgendem auszurüsten:
- einem Speicher (MPFA, MSFA), der geeignet ist, sich auf die unabhängige Sprechstelle beziehende provisorische Fernsprechanschlußdaten zu enthalten;
- Steuermittel (MCFA), die geeignet sind, provisorische öffentliche Fernsprechanschlußdaten für die unabhängige Sprechstelle zu erzeugen; und
daß es aus den folgenden Schritten besteht:
1) in Höhe der Zulassungsmittel (CA),
. 11) als Antwort auf ein von den Nebenzulassungsmitteln (CAA) ausgehendes öffentliches digitales Wort zur Anforderung der Verbindung (ROAMING) mit dem Nebenfernsprechnetz variable Daten (EPIN1, EPIN2) erzeugen, ihre Transformierte (S1, S2) mit Hilfe eines aus geheimen Fernsprechanschlußdaten gebildeten Schlüssels (PIN) zu errechnen, wenn das öffentliche digitale Verbindungsanforderungswort (ROAMING) eine die Authentifizierung der unabhängigen Sprechstelle durch die Zulassungsmittel betreffende vorbestimmte Bedingung nachweist,
. 12) die variablen Daten (EPIN1, EPIN2) und ihre so errechnete Transformierte auf die Nebenzulassungsmittel (CAA) übertragen,
2) in Höhe der Nebenzulassungsmittel,
. 21) provisorische öffentliche Fernsprechanschlußdaten erzeugen,
. 22) provisorische geheime Fernsprechanschlußdaten (RPIN) erzeugen und sie mit Hilfe der variablen Daten (EPIN1, EPIN2) und ihrer Transformierten (S1, S2) chiffrieren,
. 23) die so chiffrierten provisorischen geheimen Fernsprechanschlußdaten in Begleitung von diesen so erzeugten provisorischen öffentlichen Fernsprechanschlußdaten, zur unabhängigen Sprechstelle übertragen;
3) in Höhe der unabhängigen Sprechstelle (SP),
. 31) die so erhaltenen chiffrierten provisorischen geheimen Fernsprechanschlußdaten mit Hilfe des aus geheimen Fernsprechanschlußdaten gebildeten eigenen Schlüssels (PIN) dechiffrieren und
. 32) die so erhaltenen unchiffrierten provisorischen öffentlichen und so dechiffrierten geheimen Fernsprechanschlußdaten im Speicher (MPP, MSP) speichern.

19. Verfahren nach Anspruch 18, dadurch gekennzeichnet, daß der Schritt 22 außerdem die folgenden Schritte umfaßt:
*221) eine zusätzliche variable Information (EPIN3) erzeugen und die Fernsprechanschlußdaten außerdem mit Hilfe dieser zusätzlichen variablen Information (EPIN3) chiffrieren.

## Claims

1. Telephone installation comprising:
- at least one fixed terminal (BF) connected to a switched telephone network (RTC);
- at least one autonomous station (SP) capable of remote communication with the fixed terminal (BF), consequent upon a call request from the said autonomous station (SP); the autonomous station having processing means (UTP) comprising:
. a memory (MPP, MSP) intended to store telephone subscriber data relating to the autonomous station (SP), and
. data encoding/decoding means (CDP);
- enabling means (CA) connected to the fixed terminal (BF) and provided with processing means (UTF) suitable for monitoring the said telephone subscriber data, for the purpose of preventing the establishment of a telephone link,
characterised in that the processing means (UTF) of the enabling means comprise:
- a memory (MPF, MSF) suitable for containing, in correspondence, telephone subscriber data relating to the autonomous station and a datum suitable for indicating that the said telephone subscriber data must be remote-loaded into the said autonomous station;
- means (CDF) for encoding/decoding the variable key data with means enabling at least one special key for the autonomous station to be selected;
- control means (MCF) suitable for seeking, on demand, telephone subscriber data through the identification of the autonomous station,
in that, at the enabling means (CA),
. in response to a public digital call request word (LID) emanating from the autonomous station (SB) accompanied by a public digital word identifying the autonomous station (PID) and in the presence of a loading request signal verifying a predetermined condition relating to the remote loading of the telephone subscriber data, the control means (UTF) seek all the telephone subscriber data relating to the autonomous station (SP) and the one indicating the remote-loading order,
. in that the encoding/decoding means (CDF) encode, using the special key (EPID), those which are secret (PIN),
. in that the processing means (UDF) enable the transmission of the public telephone subscriber data in clear as well as those that are secret and which have thus been encoded, to the said autonomous station (SP) according to the value of the data indicating the remote-loading order,
whilst, at the autonomous station (SP),
. the encoding/decoding means (CDP) decode the encoded secret telephone subscriber data thus received by means of the special key (EPID), and
. in that the processing means (UTP) store the public subscriber data thus transmitted in clear and the secret ones thus decoded in the memory of the autonomous station (SP).

2. Installation according to Claim 1, characterised in that the loading request signal is a signal emanating from the autonomous station.

3. Installation according to Claim 2, characterised in that the loading request signal emanating from the autonomous station consists of entering on the keypad of the autonomous station (SP) the public digital call request word (LID).

4. Installation according to Claim 1, characterised in that the loading request signal is a signal emanating from the enabling means.

5. Installation according to any one of the preceding claims, characterised in that, consequent upon the transmission of the public telephone subscriber data in clear and the secret encoded ones, the processing means of the enabling means send to the autonomous station a public digital authentication request word (AUTH_REQ) accompanied by a random key word (RAND);
in that, in response to the digital authentication request word (AUTH_REQ), the encoding/decoding means (CDP) of the autonomous station encode the random key word thus received by means of secret telephone subscriber data (PIN) thus remote-loaded and forming an additional special key for the autonomous station,
in that the autonomous station transmits the said encoded random key word (CPIN) to the enabling means accompanied by the digital authentication response word (AUTH_RES), and
in that, in response to the digital authentication response word (AUTH_RES), the encoding/decoding means (CDF) of the enabling means (CA) decode the encoded random key word (CPIN) thus received, compare the random key word thus decoded with the random key word generated, and, in accordance with the comparison, store a datum indicating that the telephone subscriber data are loaded into the autonomous station and establish the telephone link.

6. Installation according to any one of the preceding claims, characterised in that the secret telephone subscriber data comprise the personal identification number of the autonomous station (PIN).

7. Installation according to any one of the preceding claims, characterised in that the public telephone subscriber data comprise the public digital call request word (LID), the digital operator identification word (OPSIC), the digital word relating to the service class of the autonomous station (TCOS) and the digital subscriber data (TRD).

8. Installation according to Claim 6, characterised in that the encoding/decoding means encode/decode the personal identification number of the autonomous station (PIN) in accordance with variable data (EPIN1, EPIN2) and their transform (S1, S2) by means of a cryptographic function F using the special key (EPID).

9. Installation according to Claim 6, characterised in that the encoding/decoding means encode/decode the personal identification number of the autonomous station (PIN) in accordance with variable data (EPIN1, EPIN2) and their transform (S1, S2) by means of a cryptographic function F using the special key (EPID) and an additional variable datum (EPIN3).

10. 1Installation according to any one of the preceding claims, in which the autonomous station is capable of remote communication with an auxiliary switched telephone network whose auxiliary enabling means (CAA) are connected to the enabling means (CA) with a view to allowing the exchange of data with the said enabling means (CA), characterised in that the processing means (UTFA) of the auxiliary enabling means comprise:
- a memory (MPFA, MSFA) suitable for containing temporary telephone subscriber data relating to the autonomous station;
- control means (MCFA) suitable for generating temporary telephone subscriber data for the autonomous station; and
in that, at the enabling means (CA),
. in response to a public digital word (ROAMING) requesting connection with the auxiliary telephone network (CAA), the processing means generate variable data (EPIN1, EPIN2) and compute their transform (S1, S2) using a special key (PIN) formed from secret telephone subscriber data when the public digital connection request word (ROAMING) verifies a predetermined condition relating to the authentication of the autonomous station by the enabling means,
. in that the processing means (UTF) transmit the variable data (EPIN1, EPIN2) and their transform (S1, S2) thus computed to the auxiliary enabling means (CAA);
in that, at the auxiliary authorisation means,
. the control means (MCFA) generate public temporary telephone subscriber data;
. in that the control means generate secret temporary telephone subscriber data (RPIN) and encode them using the variables (EPIN1, EPIN2) and their transform (S1, S2) thus received;
. in that the processing means (UTFA) transmit the secret temporary telephone subscriber data thus encoded to the autonomous station accompanied by the said public temporary telephone subscriber data thus generated; and
in that, at the autonomous station (SP),
. the encoding/decoding means (CDP) decode the encoded secret temporary telephone subscriber data thus received using the special key (PIN) formed from secret telephone subscriber data, and
. in that the processing means (UTF) store the public temporary telephone subscriber data thus received in clear and the secret ones thus decoded in the memory (MPP, MSP).

11. Installation according to Claim 10, characterised in that the secret temporary telephone subscriber data comprise the temporary personal identification number of the autonomous station (RPIN).

12. Installation according to either one of Claims 10 and 11, characterised in that the public temporary telephone subscriber data comprise the public digital call request word (LID), the digital operator identification word (OPSIC), the digital word relating to the service class of the autonomous station (TCOS) and the digital subscriber data (TRD).

13. Installation according to Claim 11, characterised in that the encoding/decoding means encode/decode the temporary personal identification number of the autonomous station (RPIN) in accordance with variable data (EPIN1, EPIN2) and their transform (S1, S2) by means of a cryptographic function F using the special key (PIN).

14. Installation according to Claim 11, characterised in that the encoding/decoding means encode/decode the temporary personal identification number of the autonomous station (RPIN) in accordance with variable data (EPIN1, EPIN2) and their transform (S1, S2) by means of a cryptographic function F using the special key (PIN) and an additional variable datum (EPIN3) generated by the control means of the auxiliary enabling means.

15. Installation according to any one of the preceding claims, characterised in that the enabling means (CA) or the auxiliary enabling means (CAA) correspond to a general enabling centre for all the autonomous stations and the fixed terminals of the switched network (RTC) or of the auxiliary switched network (STCA).

16. Installation according to one of Claims 1 to 14, characterised in that the enabling means (CA) or the auxiliary enabling means (CAA) are housed in the fixed terminal and are connected to a general enabling centre for all the autonomous stations and fixed terminals of the switched network (RTC) or of the auxiliary switched network (RTCA).

17. Method for the remote loading of telephone subscriber data intended to be used in a telephone installation comprising:
- at least one fixed terminal (BF) connected to a switched telephone network (RTC);
- at least one autonomous station (SP) capable of remote communication with the fixed terminal (BF), consequent upon a call request from the said autonomous station (SP); the autonomous station having processing means (UTP) comprising:
. a memory (MPP, MSP) intended to store telephone subscriber data relating to the autonomous station (SP), and
. data encoding/decoding means (CDP);
- enabling means (CA) connected to the fixed terminal (BF) and provided with processing means (UTF) suitable for monitoring the said telephone subscriber data, for the purpose of preventing the establishment of a telephone link,
according to any one of Claims 1 to 9 and 15 and 16,
characterised in that provision is made for equipping the processing means (UTF) of the enabling means (CA) with:
- a memory (MPF, MSF) suitable for containing, in correspondence, telephone subscriber data relating to the autonomous station and a datum suitable for indicating that the said telephone subscriber data must be remote-loaded into the said autonomous station;
- means (CDF) for encoding/decoding variable key data with means enabling at least one special key for the autonomous station to be selected;
- control means (MCF) suitable for seeking, on demand, telephone subscriber data through the identification of the autonomous station;
and in that it comprises the following steps:
a) at the enabling means (CA),
. a1) in response to a public digital call request word (LID) emanating from the autonomous station (SP) accompanied by a public digital word identifying the autonomous station (PID) and in the presence of a control signal verifying a predetermined condition relating to the remote loading of the telephone subscriber data, seeking all the telephone subscriber data relating to the autonomous station (SP) and the one indicating the remote-loading order,
. a2) encoding, by means of the special key (EPID), those which are secret (PIN),
. a3) enabling the transmission of the public telephone subscriber data in clear and the secret ones thus encoded to the said autonomous station (SP) according to the value of the data indicating the remote-loading order,
b) at the autonomous station (SP),
. b1) decoding the encoded secret telephone subscriber data thus received by means of the special key (EPID),
. b2) storing the public subscriber data thus transmitted in clear and the secret ones thus decoded in the memory of the autonomous station (SP).

18. Method for the remote loading of telephone subscriber data intended to be used in a telephone installation, comprising:
- at least one fixed terminal (BF) connected to a switched telephone network (RTC);
- at least one autonomous station (SP) capable of remote communication with the fixed terminal (BF), consequent upon a call request from the said autonomous station (SP); the autonomous station having processing means (UTP) comprising:
. a memory (MPP, MSP) intended to store telephone subscriber data relating to the autonomous station (SP), and
. data encoding/decoding means (CDP);
- enabling means (CA) connected to the fixed terminal (BF) and provided with processing means (UTF) suitable for monitoring the said telephone subscriber data, for the purpose of preventing the establishment of a telephone link,
according to any one of Claims 10 to 16, in which the autonomous station is capable of remote communication with an auxiliary switched telephone network whose auxiliary enabling means (CAA) are connected to the enabling means (CA) with a view to allowing the exchange of data with the said enabling means (CA),
characterised in that provision is made for equipping the processing means (UTFA) of the auxiliary enabling means with:
- a memory (MPFA, MSFA) suitable for containing temporary telephone subscriber data relating to the autonomous station;
- control means (MCFA) suitable for generating public temporary telephone subscriber data for the autonomous station; and
in that it comprises the following steps:
1) at the enabling means (CA),
. 11) in response to a public digital word (ROAMING) requesting connection with the auxiliary telephone network emanating from the auxiliary enabling means (CAA), generating variable data (EPIN1, EPIN2), computing their transform (S1, S2) using a special key (PIN) formed from secret telephone subscriber data when the public digital connection request word (ROAMING) verifies a predetermined condition relating to the authentication of the autonomous station by the enabling means,
. 12) transmitting the variable data (EPIN1, EPIN2) and their transform thus computed to the auxiliary enabling means (CAA),
2) at the auxiliary enabling means,
. 21) generating public temporary telephone subscriber data,
. 22) generating secret temporary telephone subscriber data (RPIN) and encoding them by means of the variable data (EPIN1, EPIN2) and their transform (S1, S2),
. 23) transmitting the secret temporary telephone subscriber data thus encoded to the autonomous station accompanied by the said public temporary telephone subscriber data thus generated;
3) at the autonomous station (SP),
. 31) decoding the encoded secret temporary telephone subscriber data thus received by means of the special key (PIN) formed from secret telephone subscriber data, and
. 32) storing the public temporary telephone subscriber data thus received in clear and the secret ones thus decoded in the memory (MPP, MSP).

19. Method according to Claim 18, characterised in that step 22 also comprises the following steps:
*221) generating an additional variable datum (EPIN3) and encoding the telephone subscriber data also using the said complementary variable datum (EPIN3).
